# EUROPEAN PATENT SPECIFICATION

(11) **EP 2 702 810 B1**
(45) Date of publication and mention of the grant of the patent: **03.06.2015**
(21) Application number: 12718642.7
(22) Date of filing: 26.04.2012
(51) Int. Cl.: H04W 52/02

(54) **METHOD AND SYSTEM FOR ENERGY SAVING AND MINIMIZING INTERFERENCE LEVEL IN A RADIO ACCESS NODE NETWORK DEPLOYMENT**
VERFAHREN UND SYSTEM ZUR ENERGIEEINSPARUNG UND MINIMIERUNG DES STÖRPEGELS BEI DER EINRICHTUNG EINES FUNKZUGANGSKNOTENNETZWERKS
PROCÉDÉ ET SYSTÈME DESTINÉS À ÉCONOMISER L'ÉNERGIE ET À RÉDUIRE AU MINIMUM LE NIVEAU DU BROUILLAGE DANS LE DÉPLOIEMENT D'UN RÉSEAU DE NUDS D'ACCÈS RADIO

(30) Priority: 29.04.2011 ES 201130693
(43) Date of publication of application: 05.03.2014
(73) Proprietor: Telefonica S.A., 28013 Madrid (ES)
(72) Inventor: MATAS RUIZ, Primitivo, E-28013 Madrid (ES); RUIZ ARAGON, Pilar, E-28013 Madrid (ES); PEREZ TARRERO, Quilano, E-28013 Madrid (ES); MINO DÍAZ, Emilio, E-28013 Madrid (ES)
(74) Representative: Carlos Hernando, Borja
(86) International application number: PCT/EP2012/057701
(87) International publication number: WO 2012/146683

(56) References cited:
- EP-A1- 2 056 628
- WO-A1-2010/130104
- GB-A- 2 445 990
- US-A1- 2011 044 284
- ALCATEL-LUCENT: "Capacity and Coverage SON Use case", 3GPP DRAFT; R3-080082_SONCAPA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Sorrento, Italy; 20080205, 5 February 2008 (2008-02-05), XP050163314, [retrieved on 2008-02-05]

## Description

### Field of the art

The present invention generally relates, in a first aspect, to a method for energy saving and minimizing interference level in a radio access node network deployment, by performing a procedure of switching on and/or off of RF transceivers thereof, and more particularly to a method performing said switching on and/or off on the basis of a master/slave coordinated configuration.

A second aspect of the invention relates to a radio access node network deployment system for energy saving and minimizing interference level adapted for implementing the method of the first aspect.

The invention is particularly applicable to femtocells, and is also applicable to standard base stations, that include high /medium power macrocells, microcells and picocells

### Prior State of the Art

A femtonode is a small, low power, short range cellular base station, installed by the end user, for indoor coverage in homes and enterprises. A femtocell is connected to the mobile operator's network by a physical broadband connection such as digital subscriber line (xDSL), cable or fibre, and incorporates automatic mechanisms such as: self-connection, self-configuration and self-optimization, for easy and unattended deployments. End users can have a high signal level, due to the short distance between transmitter and receivers and in consequence enjoy a high throughput and a better user experience in comparison with indoor coverage provided by macrocells.

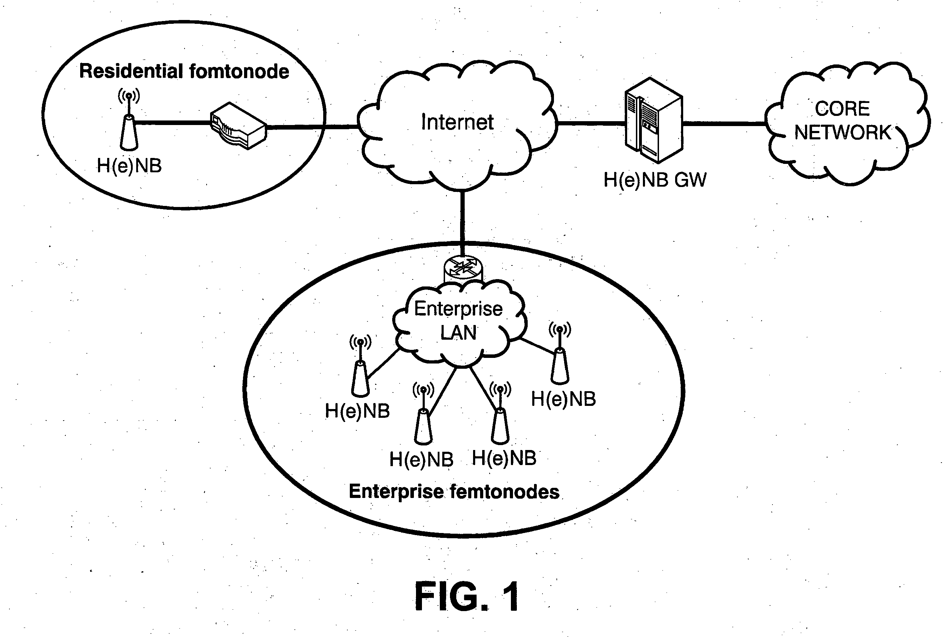

The femtonodes, as Figure 1 shows, are integrated to the existing mobile Core Network (CN) by means of a network controller and gateway, generally referred as Femto-Gateway or H(e)NB GW in 3GPP standard documents [1], located between the IP access network and the mobile operator core network. The Femto-Gateway aggregates and tunnels the traffic from a large number of femtonodes over the subscriber's broadband IP network such as DSL, cable or fibre, into the existing mobile core network by means of standard interfaces: lu-CS and lu-PS for 3g systems as 3GPP UMTS and S1 for 4G systems as 3GPP LTE/LTE -Advanced. The connection approach between femtonodes and the Gateway for 3G is a new interface referred as luh [2] [3]. Note that for LTE, S1 is also used between femtonodes and the Gateway that a LTE femtonode could be connected directly to the core network instead of being connected through the Femto Gateway.

Currently, femtonodes could be deployed in two different scenarios. Into a home environment, a single femtonode allows the mobile customers to have strong cellular reception and broadband Internet connection inside their own home. The scenario for enterprise environments (the focus of the invention), is characterized by the formation of group of femtocells, properly deployed in the target area after a rational planning, in order to provide the mobile services demanded by final users. Besides, the femtonodes in an enterprise scenario, unlike the residential scenario, have to assure the mobility between them and with the neighbouring macro, as well as to connect with their access gateway through the LAN of the site where they are deployed. In this way the femtonodes have the possibility to connect among themselves through the LAN. This feature is utilized by the invention as is explained later on.

One important feature of femtonodes deployments is the self-configuration and self-optimization capability for radio parameters adjusting. In enterprise environments, with a group of femtocells; each individual node needs to collaborate with its neighbours to jointly provide the best service coverage with the best quality of service.

The high numbers of femtonodes deployed in a business group make it attractive the study of different algorithms and methods for reducing the overall energy consumption and for mitigating interference as much as possible within the group. Also the impact over the mobility management, self-optimization could be a field of interest.

Another aspect that may require attention is the traffic peak produced in a random or predicted way in environments such as auditoriums, meeting rooms. In these environments the number of femtonodes necessary to serve these peaks of users is oversized the rest of the time, and it seems not recommended to keep them switched-on all the time. A good management of femtonodes should resolve the above issues.

One requirement of the proposed mechanisms is that they should work without any human interaction. The femtonodes belonging to the cluster must collaborate in a coordinate way to provide the optimal coverage with enough quality of service.

One of the most important issues that must be addressed regarding femtocells is how to avoid the harmful interference either to a macrocell or to neighbour femtonode if the same spectrum is utilized by the macrocells and femtocells [4].

The current state of the art on femtonodes focuses on interference-aware coverage optimization and energy saving procedures. For each of these topics currently different mechanisms and technologies are proposed that we mention below.

### - Coverage optimization

There are two types of coverage mechanisms: Mechanisms based on stand-alone femtonodes, and cooperative mechanisms based on femtonodes groups:
1. Uncoordinated coverage optimization mechanisms for stand-alone femtonodes.

When a femtocell is powered on, it scans the neighbouring radio environment and selects the optimal radio parameters to achieve the most adequate quality of service. The initial transmitted power could be a preconfigured value or could be selected in such a way that its coverage is adjusted to the target area, minimizing interference with neighbouring macro cells.

In [5] and [6] authors suggest auto-configuration and self-optimization schemes. While auto-configuration schemes provide an initial power setting of the femtocell (a typical value is -10 dBm), self-optimization schemes try to optimize femtocell transmitting power during normal operation. Authors distinguish three auto-configuration schemes; i) fixed power, ii) distance based and iii) measurement based.

In [7], the authors contemplate another way of femtocells power adaptation taking into consideration activity/inactivity of users. If no users of femtocells are currently active (no voice or data are transmitted), the transmitting power of femtocells is decreased by 10 dB.

In [4] is proposed a power control mechanism with a novel approach for dynamic adaptation of transmitting power of femtocell access points. The basic idea is to adapt the transmitting power of femtocells according to current traffic load and signal quality between mobile stations and femtocell in order to fully utilize data frame. The advantage of this approach is its potential to decrease interference to users of macro cell or adjacent femtocells at light traffic load. This proposal concludes that femtocell's transmitting power can be significantly reduced while the same QoS level is still guaranteed to the femtocell users.

Although these mechanisms have been designed for a stand-alone femtocell scenario, deployed in residential environments, currently they are being used in enterprise scenarios.
2. Coordinated Radio Coverage Optimization for networked femtocells.

In an enterprise scenario, where the target area must be covered by a group of femtonodes instead of a stand-alone femtonode, the individual cells need to collaborate to jointly provide coverage optimization. Therefore, the requirements for coverage optimization for the deployment of femtocell groups differ significantly from stand-alone femtocell deployments, and the existing solutions mentioned previously are not applicable.

Unlike the previous stand-alone femtonodes, coordinated coverage algorithms update the transmission power assisted, not only by standard measurement reports from the active user equipments, in the own femtocell coverage area, but also by some information received from neighbouring femtocells. The main objective of these kinds of algorithms is to balance femtocell load in a group of femtocells, joint covering the same area as well as minimizing the coverage holes and transmission power.

Centralized approaches are currently in use in actual 3G macro cellular deployments. In [8] is described a centralized, joint coverage optimization algorithm that centrally computes the optimal pilot transmitting power levels for each cell site in the macrocell network, resulting in maximizing the coverage area while minimizing interference for a desired level of coverage overlap. These algorithms are not applicable to femtocells due to the expected large scale deployment of such networks and by the femtocell plug-and-play nature. On the other hand, it necessitates the use of decentralized/distributed configuration algorithms that are operational locally at the nodes and utilize the available local information.

Reference [9] describes a distributed/decentralized, joint coverage optimization algorithm that runs individually in each femtocell, and works towards achieving user load balancing and minimization of coverage holes and overlap.

These algorithms don't use any global information or coordination from the femtocell gateway nor any other network element.

In Reference [1] [10] a mobile communications system is described in which base stations communicate with each other using a Master/Slave protocol to exchange load balancing information that can be used to control the handover of mobile devices amongst neighbouring base stations and/or neighbouring cells. The Master base station requests the Slave base station to provide a load status report to it either at a defined time or periodicity or in response to certain events.

In Reference [1] [11] a wireless base stations have storage unit that stores a flag indicating whether a local station is a master base station. A determination unit determines wireless parameter set to data transmission channel. An acquisition unit acquires wireless parameter set notified from master base station, when local station is not a master base station. A setting unit sets determined wireless parameter to channel, when local base station is master base station, and sets the acquired wireless parameter to channel when base station is not master base station.

### Energy saving procedures:

Reduction in energy consumption of mobile networks is considered of great importance from economical (cost reduction) and environmental (decreased CO2 emissions) perspectives. Several publications emphasize the amount of energy that can be saved by reducing the number of active cells during the periods when they are not necessary because traffic is low, for macrocell network in general [1] [12] and femtonodes in particular [13].

With the switching off of cell radio emissions when they are not necessary, along with the energy saving, a reduction of interference in neighbouring cells is achieved.

From the energy saving point of view, two different cases must be considered.

The first one is femtocells that only can be switched off when there are no users in its coverage area to be served. This is the case of femtocells deployed for coverage reasons, for example, or those residential femtocells that may be associated to low tariffs in calls.

The second one is those femtocells that may be switched-off when traffic is low. This is the case of femtocells deployed for capacity reasons. The radio coverage and service provisioning are taken care of by the cells that remain active, so as to guarantee that service is available over the whole area.

Some implementations have been proposed for switching off the radio section of a femtonode when the user is not in the neighbourhood of his/her femtonode [14] [15]; these solutions detect when the user Equipment is camped in the nearest macro cell to the femtonode, in order to decide when switching on or off the femtonode. When the User Equipment is not camped on a predefined macrocell it is assumed to be far away from home and the femtonode is switched off, and when the User Equipment enters in its predefined macrocell, It is assumed to be in the neighbourhood of its corresponding femtonode, which is switched on.

Other existing implementation [16] switches off the transceiver section of the femtonode when it is not supporting any active connection with a User Equipment. In order to switch on the femtonode when it must support an active connection, that implementation relies on the help of the closest serving macrocell; that serving macrocell detects when an User Equipment which is included in the Closed Subscriber Group of the femtocell attempts to establish an active connection with the macrocell, and in that case it sends an indication to the femtonode to switch on, through the Mobility Management Entity and the so-called S1 interface, and then handovers the active connection to the femtocell.

Other implementation [17] relies on an activation server, which remotely switches on or off the transceiver section of the femtonode. The criteria for the activation server to switch on or off the transceiver section of the femtonode is the location of the User Terminal, which is known to the activation server through GPS data reported by the User terminal, or deduced from the macrocell where the User Equipment is camping.

Other implementation [18] for switching on or off a femtonode is based in the detection of specific signal patterns transmitted by the User Equipment, which requires that a femtonode whose transceiver is switched off periodically switches on the receiver section in order to be able to detect the User Equipment signal pattern.

Another mechanism proposed [19] is the femtocell activation based on noise rise from active UE. It allows activating the femto only for serving a call. When the received power level at the femtonode exceeds a threshold level, it is activated to serve the UE.

When a new cell must be deployed to cover periodic traffic peaks due to daily traffic patterns or to sporadic peaks due to special events such as meetings or conferences, the usual approach to save energy switching off the cell during the low traffic periods and switching it on again when it is needed requires a manual intervention. In the case of sporadic peaks this is only possible when these events are previously known.

Finally, other mechanisms for energy saving and minimizing interference level in a radio deployment are the one proposed in [22] and [23] [22] Provides support mechanisms for at least one adding and removing a cell from operation in a heterogeneous radio network having at least two different types of cells, a first type of basic cell for providing basic radio coverage and a second type of cell associated to a basic cell as a capacity enhancing cell. On another hand [23], discloses a method for controlling access points (APs), comprising receiving load information of working APs in a coverage area, said load information judging a current overall capacity of the coverage area according to the load information; and controlling APs in the coverage area according to a judgment result. For performing all these steps it includes a network management server.

### Problems with existing solutions:

### 1. Coverage optimization

The uncoordinated mechanisms have been designed for stand-alone femtocells, and although currently they are being used in networked femtocells, aspects such as mobility and coordinated coverage optimization with other femtocells have not been taken into account.

A limitation from the coverage optimization mechanisms/algorithms for networked femtonodes is that it is not considering that the unused femtonodes could shut down the radio transmission block, in this way femtonodes' network radio coordination is simplified, and energy consumption and interference are clearly reduced with respect to the distributed approach proposed in [9] and [1] [10]. The shutdown mechanism proposed in this invention is specially tailored to a scenario with steeply traffic peaks, in which to maintain operative all femtonodes is only justified when the coverage zone is fully used (e.g. events in an auditorium, business fair infrastructure coverage when there is an event, etc.).

Concerning the distributed/decentralized joint radio coverage optimization the limitation of the coordinated algorithm proposed in [9] is the scalability in case of large femtocell networked deployments in which a femtocell has to coordinate with many others, the needed interactions with neighbour femtocells could lead to an unacceptable signalling traffic, also could appear stability problems due that a change in radio conditions can affect to the overall deployment with a significant increase of signalling traffic. Another constraint is the lack of reference point in which an operation and maintenance subsystem could check femtocell networks status, essential to control large deployments. The approach proposed in [9] is totally distributed and each femtocell only has information of neighbour femtocells without reference points.

In [1] [10] is proposed a hierarchical structure of master/slave base stations applied for optimized load balancing without considering energy-saving mechanisms such as a base station switch on / off, when their capacity were not necessary, or base stations transmitted power control for coverage adjustment.

In [1] [11] is defined a hierarchical structure to establish a filtering or selection of messages received from the control unit to configure radio transmission parameters, without going into of base station coordination to optimize group performance or energy efficiency.

### 2. Energy saving procedures

For the energy saving procedures, a limitation common to all the methods mentioned in the previous section is that there is not coordination with other nodes in order to guarantee service continuity between the femtonode and its neighbour cells during switch on or off procedures.

Regarding procedures proposed in [14] [15] [16] [17] they are designed for femtonodes associated to a group of UEs, with access restrictions. They cannot be used for femtonodes with open access under the coverage of a macro cell. Besides, these implementations are of little value when the User Equipment is usually camped in predefined macrocell, something very usual in suburban and rural macrocells that provide a wide coverage, or that can happen in dense urban areas depending on the customer habits or usage scenario.

Besides, procedure proposed in [17] has the problem that in many occasions the UE will not include a GPS receiver, and also it is necessary to configure the server for the femtonode control activation and implement the associated methods to convey the GPS data.

The implementation proposed in [18] requires that the UE sends periodically a specific signal pattern that increases its power consumption and battery drainage as well as the radio resources used for signalling purposes.

### Description of the Invention

It is necessary to offer an alternative to the state of the art which overcomes the above mentioned problems from which the indicated known proposals suffer.

To that end, the present invention concerns, in a first aspect, to a method for energy saving and minimizing interference level in a radio access node network deployment, comprising the switching on and/or switching off of RF transceivers of one or more radio access nodes of said radio access node network deployment.

On contrary to known proposals, the method of the first aspect of the invention comprises arranging said radio access node network deployment in a master/slave configuration, and performing said switching on and/or switching off automatically and applied to slave radio access nodes of said radio access node network deployment.

For a preferred embodiment said radio access nodes are femtocell nodes. Even though in many sections of this document radio access nodes are referred to femtocells, the invention also can be directly applied to standard base stations, as it is gathered in the embodiment "Standard Base Station".

For the reasons stated in the previous section, in this invention it is proposed a hierarchical and partially centralized approach.

The invention proposes a hierarchical structure for enterprise femtonodes deployments based on their location with a twofold objective, energy saving and interference minimization. This mechanism allows switching off the RF sub-system of some femtonodes under certain conditions.

Some embodiments of the method of the first aspect of the invention are described with reference to appended claims 2 to 14, and in a subsequent section related to the detailed description of several embodiments.

A second aspect of the invention relates to a radio access node network deployment system for energy saving and minimizing interference level, comprising a plurality of radio access nodes with respective RF transceivers switchable on and off.

On contrary to known proposals, in the system of the second aspect of the invention said radio access nodes are arranged according to a master/slave configuration, and in that it comprises control means for performing said switching on and/or switching off automatically and applied to slave radio access nodes of said radio access node network deployment.

For a preferred embodiment the control means of the system are intended for implementing the method of the first aspect.

Some embodiments of the system of the second aspect of the invention are described with reference to appended claims 16 and 17, and in a subsequent section related to the detailed description of several embodiments.

### Brief Description of the Drawings

The previous and other advantages and features will be more fully understood from the following detailed description of embodiments, with reference to the attached drawings (some of which have already been described in the Prior State of the Art section), which must be considered in an illustrative and non-limiting manner, in which:
Figure 1 shows a general architecture for femtocells deployment.
Figure 2 shows the coordination between hierarchical femtonodes provided by the present invention, for an embodiment.
Figure 3 shows shared coverage and only master coverage states for a hierarchical group of femtocells, according to an embodiment of the invention.
Figure 4 shows the initial configuration for hierarchical group of femtonodes according to an embodiment of the method of the first aspect of the invention.
Figure 5 shows the coordination process in a hierarchical femtocell group according to an embodiment of the method of the first aspect of the invention.
Figure 6 shows the flow chart for master femtonode process, as per an embodiment of the method of the first aspect of the invention.
Figure 7 shows the flow chart for slave femtonode process, according to an embodiment of the method of the first aspect of the invention.
Figure 8 shows an embodiment of the invention regarding an auditorium application scenario.
Figure 9 shows, for the embodiment of Figure 8, the only master coverage state and shared coverage state.
Figure 10 shows, for the embodiment of Figure 8, the auditorium scenario slaves switch-on procedure.
Figure 11 shows, for the embodiment of Figure 8, the auditorium scenario shutdown procedure for slave femtonodes.
Figure 12 shows another embodiment of the invention regarding an office building application scenario.
Figure 13 shows, for the embodiment of Figure 12, the only master coverage and shared coverage states.

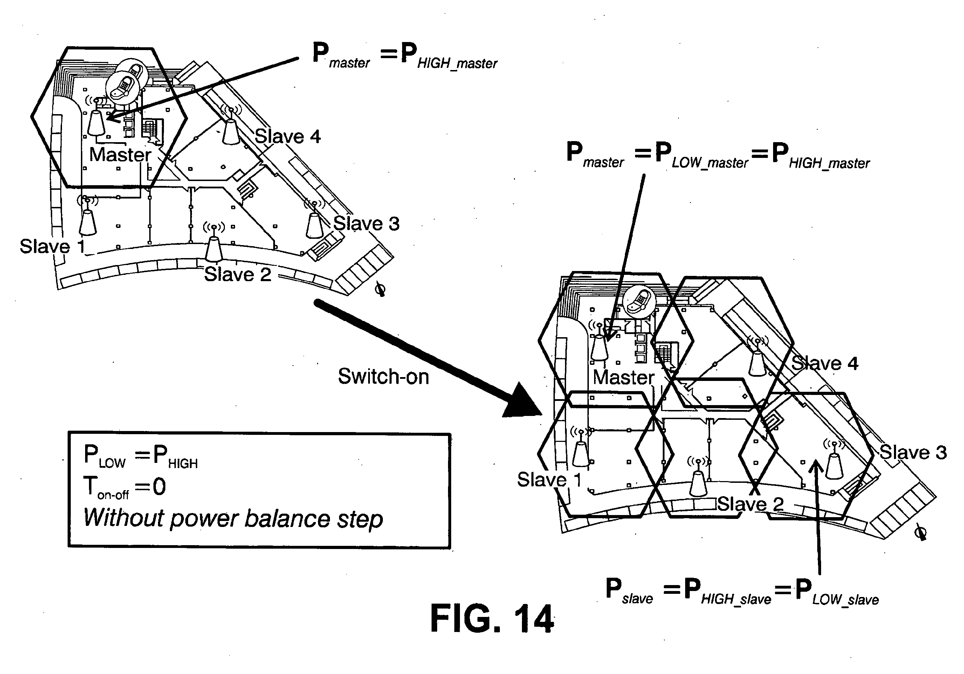

Figure 14 shows, for the embodiment of Figure 12, the office building scenario slaves switch-on procedure.
Figure 15 shows, for the embodiment of Figure 12, the office building scenario shutdown procedure.

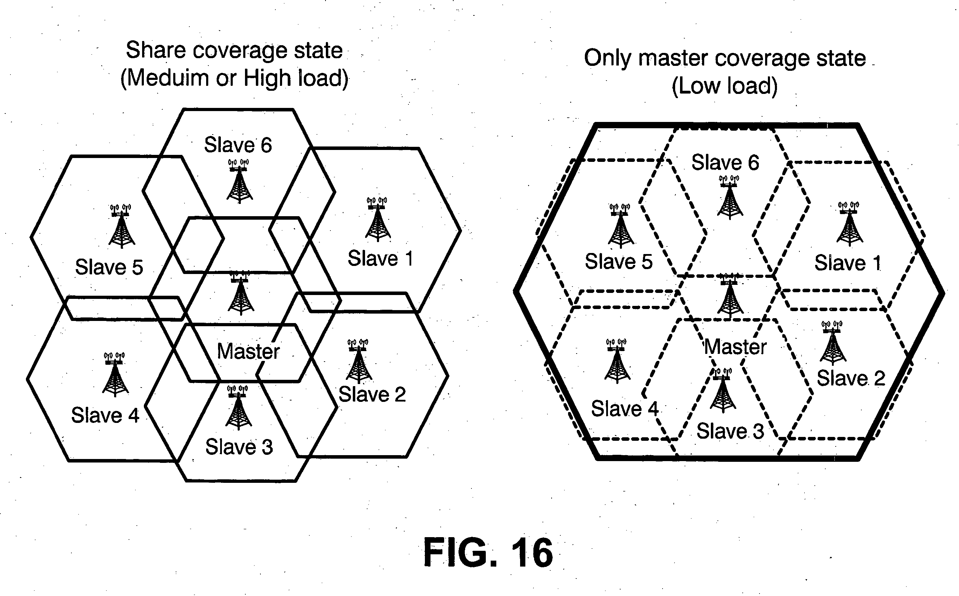

Figure 16 shows the only master coverage state and the shared coverage state for standard base station scenario, as per another embodiment of the method of the first aspect of the invention.
Figure 17 shows the macro base station scenario slaves switch-on procedure, as per another embodiment of the method of the first aspect of the invention.

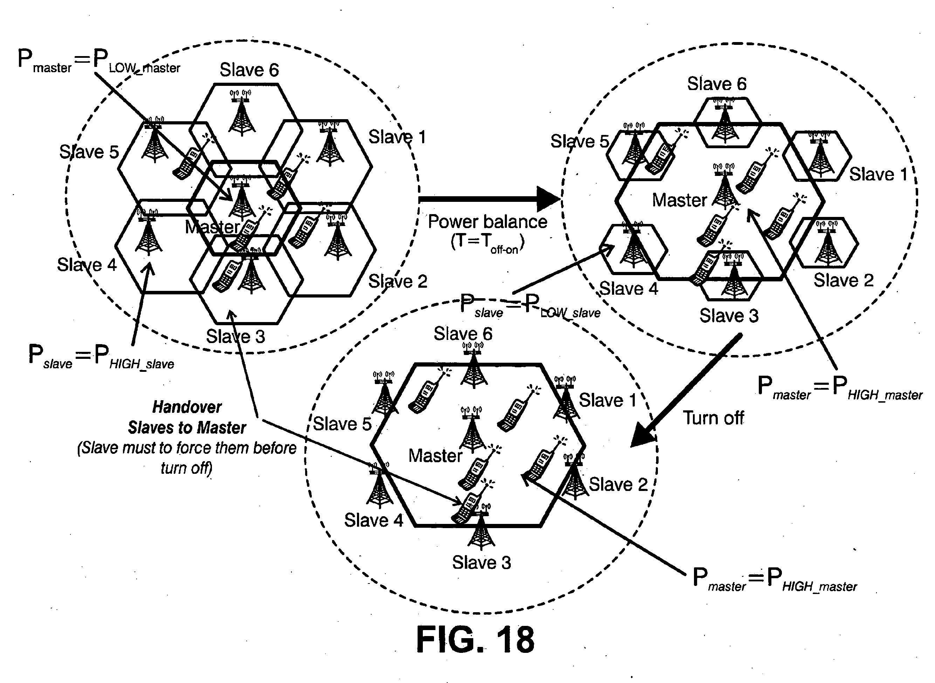

Figure 18 shows the standard base station scenario shutdown procedure for slave base stations, as per another embodiment of the method of the first aspect of the invention.
Figure 19 shows, in the form of a graph, an estimation of energy saving for femto deployment based on the invention.

### Detailed Description of Several Embodiments

In a typical femtocell network deployment, there is not hierarchical relationship among them. Femtonodes are located with the aim to cover the whole area (a building, for example) with no coverage holes, and all of them continuously radiating even if there are no users in active or idle mode. Besides, additional femtonodes may be deployed in order to cope with traffic peaks due to an unequal distribution of the users in time. This may be the case, for example, of an auditorium or meeting hall. In this scenario, though one femtonode could cover the whole area, due to capacity issues additional femtonodes would be necessary to serve all the users during some periods of time.

In order to avoid the unnecessary waste of energy and minimize the interference generation, the invention proposes to build groups of femtonodes with a certain hierarchical relation between them having the possibility of switching off the RF transceiver of those nodes that are not essential for a correct service when the load conditions permit it.

The basic concept of the invention consists of providing to the femtonodes of an enterprise deployment (or similar scenarios where there is a communications infrastructure that can support a communication between them, like an Ethernet LAN), a mechanism to deactivate the RF sub-system of some femtonodes during certain periods of time. The mechanism is based on a master/slave communication through the communications infrastructure (e.g. a LAN) used as backhaul of the femtonodes, for the interchange of simple messages related with the traffic load of the deployment. The messages interchange could be supported by means of a specific communications interface for those femtonodes compliant with 3GPP releases previous to release 10, or could be supported by the so-called X2 interface for 3GPP release 10 and later versions.

The main objective of the invention is to decrease the energy consumption and minimize the interference level on the deployment where the femtonodes implement this mechanism. In short, the invention provides a mechanism for the deactivation of RF sub-system of the slave femtonodes according to a certain algorithm so that the service is correctly attended while an important energy saving is achieved, and the interference level is decreased. The intention is always to solve the technical challenge without any external human control in enterprise scenarios, where a number of femtonodes could be deployed for collaborate each other in order to provide the best demanding coverage with the best quality of service.

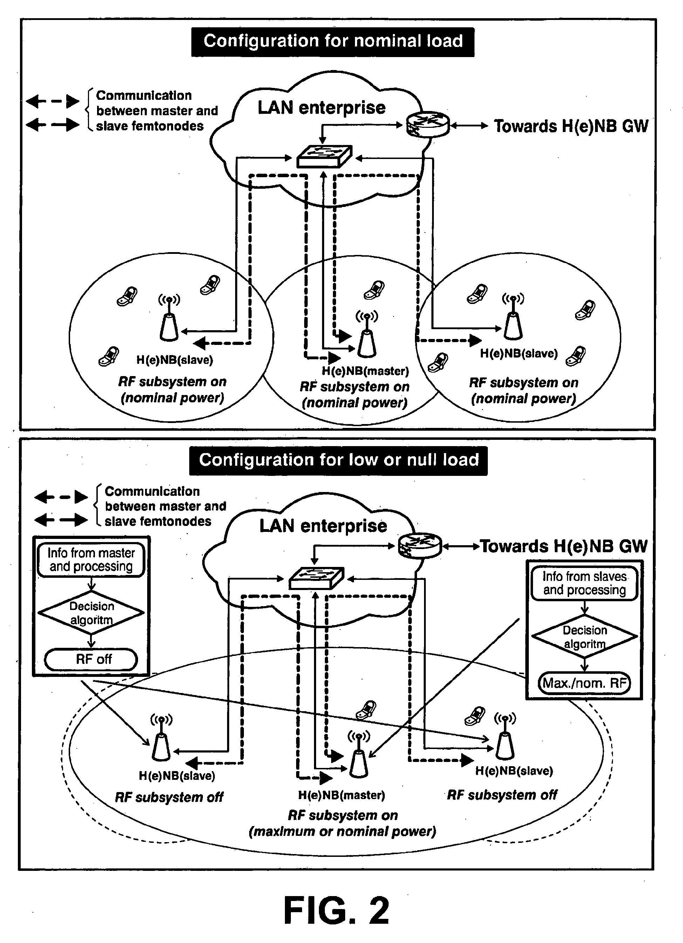

In Figure 2 it is shown the basic concept of the invention proposed to minimize interferences and provide energy saving. The interchange of information between femtonodes (master/slave) to decide in terms of a certain algorithm the activation or deactivation of the RF sub-system is transported through the local area network to which the femtonodes are connected. Note that the master femtonode has always activated its RF subsystem at nominal or maximum power.

The main idea behind the invention is to define a subgroup of femtocells subordinated to one which works as master node, and then to implement a mechanism for the control of the RF part of the femtonodes, without affecting the service associated to the whole subgroup. This power control technique can also be used for the implementation of load balance strategies between the elements of the subgroup in order to improve the quality of the offered services when all of them are radiating. It is important to note that the management system will be responsible for the initial configuration of the femtonodes subgroup, defining the functionality of each node master or slave, and sending the identities of all the subgroup. Likewise, the communications interface among master-slaves femtocells does not need any special security protection since no sensitive or private data are transmitted.

The invention deals with the establishment of a group of femtonodes, or Hierarchical Group, in a femtocell network deployment, in which one of the femtonodes assumes the role of the Master and is always on and radiating, and the other femtonodes have the role of Slaves (subordinate nodes) and their RF transceivers may be switched off when no users are camped or the Master capacity and coverage is enough to serve all users. The communication between the femtonodes within the Hierarchical Group must be supported by a communication infrastructure, which could be an Ethernet LAN or any other. The communication infrastructure will support an exchange of messages between the femtonodes within the Hierarchical Group, which could be supported by means of a specific communications interface for those femtonodes compliant with 3GPP releases previous to release 10, or could be supported by the so-called X2 interface for 3GPP release 10 and later versions.

It is important to mention here that in a femtonodes, the radio transmission block has the ability to be switched off independently of the rest of the functionalities, in order to radiate only when auto configuration process has been completed correctly and then the femtocell gets permission to do it. This is necessary, for example, to prevent radiating unlicensed or unwanted frequencies before complete the initialization process. This feature may be used to save energy when the femtocell is not necessary to serve users, switching off the RF sub-system and switching it on again when it is considered necessary.

This RF switching on/off process is immediate, as opposed to the initialization process carried out at power-on, when all the modules in the femtonodes must be initialized, the IPSec tunnel with the Security Gateway must be established, and the registration of the femtonode in the Femto Gateway and the auto configuration process must be completed. This process may take several minutes (from 5 to 15 depending on the implementation and environment). From now on, the switching on/off process refers to RF transmission block, not to the complete femtonode, except explicitly remarked.

Besides, when a femtonode is radiating, its transmission power may be changed within a power range to adjust the femtocell coverage to the environment. This may be used, for example, for load balancing and coverage adjustment.

The invention makes use of both features with the aim of minimizing energy consumption and interference.

In this invention the terms master and slave are defined as follows:
- Master femtonode. It is the coordinator of the femtonodes group and will be always radiating, changing its transmission power if necessary when the rest of the femtonodes are switched off.
- Slave femtonodes. The rest of the femtonodes in the group. They will be radiating or not depending on the load of the group or the number of camped users according to the algorithm described hereinafter. A progressive transmission power increase/decrease when switching on/off can be necessary to ensure user mobility from/to the Master femtocell.

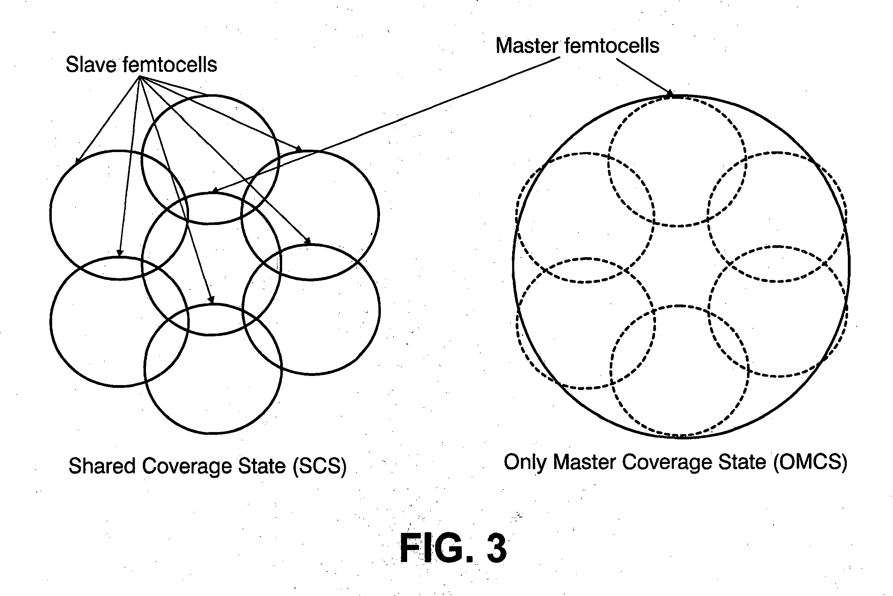

Depending on the traffic load or the total number of users, two different hierarchical femtocell group states are defined (as shown in Figure 3):
- Shared Coverage State (SCS), in which all the femtocells in the group (master and slaves) are switched on and radiating, covering the whole area.
- Only Master Coverage State (OMCS), in which all the slave femtonodes are switched off and only the master femtonode remains switched on. The master RF transmission power and, therefore, coverage, may change from the previous state depending on the scenario.

The hierarchical femtocell group coordination mechanism is responsible for switching from one state to the other.

In order to implement our invention it is necessary that the femtonodes of the group have certain information related to the parameters to be used in the algorithm proposed by the invention. The simplest way to provide this information is through the control and management system (HMS) of the femtonodes network deployment.

It is important to note that after the femtonode is powered on, among other things the femtonode has to establish a security communication channel with its management system for getting the initial configuration parameters such as frequency carrier, bandwidth, nominal RF power, PSC or range of PSCs, user access mode, handover modes and so on.

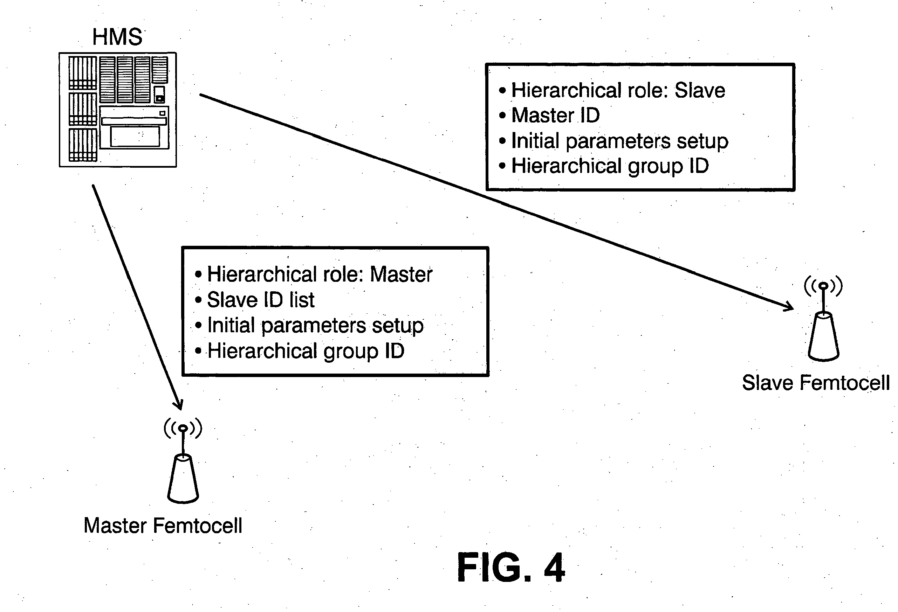

The idea is that besides this general information, the management and control system provides to the femtonode in the initial configuration process as Figure 4 shows, the needed data for the definition of the hierarchical group proposed in our invention. The hierarchical group definition includes the following data:
- Master Identification (for example, the serial number).
- Slaves Identification List (including, for example, the slaves' serial numbers)..
- Hierarchical Group ID. The Hierarchical Group identification is a number or alphanumerical identification for the cluster formed by the Master and the Slaves. important to note that in the case of LTE/UMTS Release 9, a Hierarchical Group may include one or more Closed Subscriber Groups (CSG).
- Algorithm parameters to be used by femtonodes.

The parameters to be used in the algorithm may be general (G) for all femtonodes into the group, or specific (S) indicating a particular value for each element depending on its role (master or slave). The name and description of these parameters is established as follows:
- Decision parameter (S) *Dₚ*: This is the parameter used by the femtonodes to decide the state of the femtonodes group, SCS or OMCS. The decision parameter (Dp) is calculated every update period (TUPDATE) by the master with the info requested to the slaves. Depending on the type of decision parameter (TDP) (e.g. active or camped users during the last period of time, etc.), each slave sends its measurement, and then the master processes all the measurements to calculate and transmit the value of the Dp which is used by the femtonode to change or not its current state (OMCS or SCS). A possible embodiment of the Dp parameter is the number of the active users which are camped in the femtonode, or the number of idle users which are camped in the femtonode, or any other parameter that gives an indication of the traffic load of the femtonodes group.
- Type of decision parameter (G) *TDP*. This parameter indicates the type of magnitude to be measured periodically by the femtonodes in order to calculate the decision parameter (DP) applicable in each period of time.
- Switch-on threshold (G) *TH OFF-ON*: Threshold value used to make a decision regarding the slave femtonodes RF sub-system switch on. For example if the TDP is the active users, this threshold could be referred to a certain number of active users in the femtonodes group from which the slaves should turn on their RF sub-system since only the master could not provide service to all the active users.
- Switch-off threshold (G) *TH ON-OFF*: Threshold value used to make a decision regarding the slave femtonodes RF sub-system switch off. For example if the TDP is the active users, this threshold could be referred to a certain number of active users in the femtonodes group from which the slaves should turn off their RF sub-system since only the master could provide service to all the active users.
- High transmission power (S) *P_{HIGH}*:
   - Master: power at the beginning of the Only Master Coverage State (OMCS).
   - Slaves: power at the beginning of the Shared Coverage State (SCS).
- Low transmission power (S) *P_{LOW}*:
   - Master: power at the beginning of the Shared Coverage State (SCS).
   - Slaves: initial power after turning on RF subsystem in the transition to the Shared Coverage State (SCS).
- Switch-on time (G) *T*_{*OFF*-*ON*}: Transition time from the Only Master Coverage State (OMCS) to the Shared Coverage State (SCS). This time corresponds to the lapsed in the master from current power (usually P_{HIGH}) to P_{LOW} and in the slaves from P_{LOW} to P_{HIGH}.
- Switch-off time (G) *T_{ON-OFF}*: Transition time from the Shared Coverage State (SCS) to Only Master Coverage State (OMCS). This time corresponds to the lapsed in the master from current power (usually P_{LOW}) to P_{HIGH} and in the slaves from current power (usually PHIGH) to PLOW just before turn off its RF sub-system.
- Update time (G) *T_{UPDATE}*. Period of time for updating the value of the decision parameter (D_{P}). Used by the master for the interchange of messages through the LAN.

It is important to remark that only the parameters related with RF power transmission are specific parameters since depending on the role of the femtonode (master or slave), the values will be different and could be customized for each femtonode if required. The rest of parameters are general for all the femtonodes because the transition from one state to another must be done in a synchronized way with the same transition time.

For a particular case of a group of three femtonodes (1 master and 2 slaves) with 8 users as maximum capacity per node; and using as type of decision parameter (TPD) the number of active users, the thresholds ON-OFF and OFF-ON could be 4 and 6 active users respectively, so that if the decision parameter Dₚ in a given period of time is lower than 4 the femtonodes will pass to OMCS state (only master femtonode on). On the other hand if the decision parameter Dp is higher or equal to 6, the femtonodes will pass to SCS state (all femtonodes on).

The coordination mechanism is based on the interchange of messages between the master and slave femtonodes.

The master femtonode is the coordinator for the interchange of information. It collects the individual measurements from slave femtonodes, calculates the value of the decision parameter (D_{P}), including its own measurement, and sends it back to the slave femtonodes.

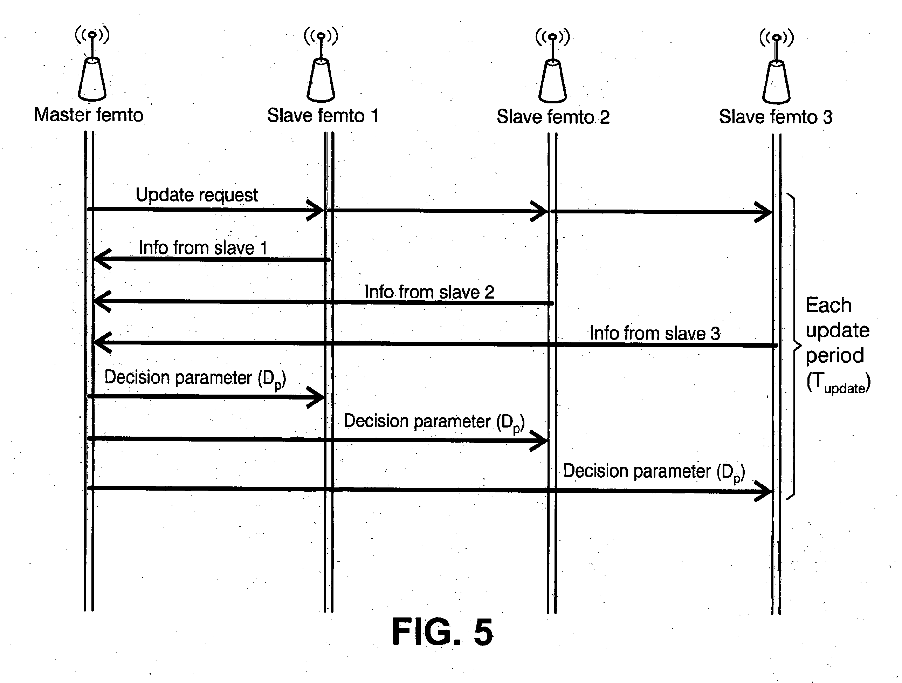

The coordination protocol is schematically shown in Figure 5. Every T_{UPDATE} the master femtonode requests to the slave femtonodes the update of their measurements. The slaves send this information and then the master calculates the new value of the decision parameter (Dₚ) and transmits it to the slaves. The decision parameter (D_{P}) will be used by the femtonodes to make a decision about its RF sub-system.

It is assumed that in a networked femtocell deployment where mobility and load balancing techniques among femtonodes are used, there is a previously established mechanism for message interchange between femtonodes over the local communication infrastructure (for example, but not precluding any other implementation, an Ethernet LAN), so the messages involved in this information interchange can be sent over IP using the common infrastructure to which all of them are connected.

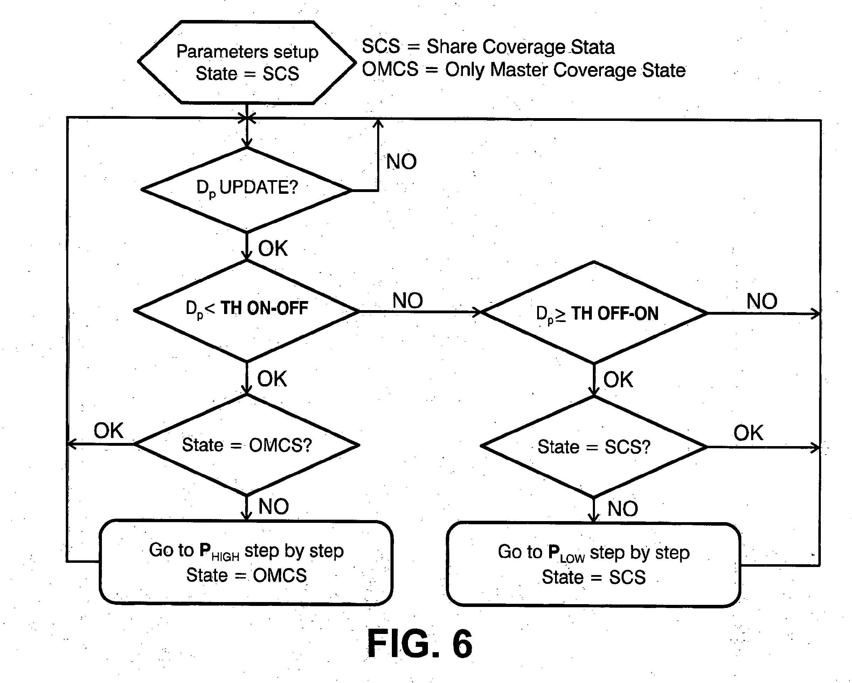

In Figure 6 it is shown the flow chart for the process performed in the master femtonode. In the startup process the master femtonode initializes the parameters indicated before and it is set to the Shared Coverage State. Afterwards the process goes to the main loop checking if the decision parameter value (D_{P}) has changed or not. When a change is noted the new DP value is compared with the thresholds set previously defined in the parameters.

If D_{P} < TH ON-OFF (slave switching-off condition) and the state is not OMCS, the master femtonode changes its transmission power gradually from its current value to P_{HIGH} and its state passes to OMCS.

If D_{P} ≥ TH OFF-ON (slave switching-on condition) and the state is not SCS, the master femtonode changes its transmission power gradually from its current value (Usually P_{HIGH}) to P_{LOW} and its state passes to SCS.

The transition from the current power value to P_{HIGH} or P_{LOW}, depending on the case, is gradually performed in order to let the active mobile users to change the serving femtocell if necessary.

The transition time is the value of the switch-off time (T_{ON-OFF}) for the transition to the Only Master Coverage State, or the switch-on time (T_{OFF-ON}) for the transition to the Shared Coverage State.

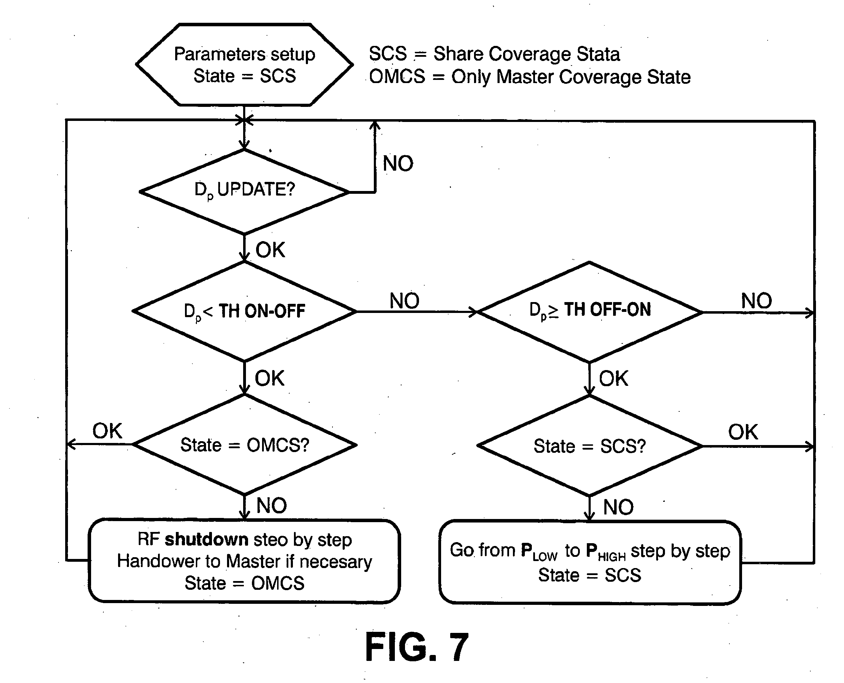

In Figure 7 it is shown the flow chart for the process performed in the slave femtonodes. In the startup process the slave femtonodes initialize the parameters indicated before and they are set to the Shared Coverage State. Afterwards the process in each femtonode goes to the main loop checking if the decision parameter value (D_{P}) has changed or not. When a change is noted the new D_{P} value is compared with the thresholds set previously defined in the parameters.

If D_{P} < TH ON-OFF (slave switching-off condition) and the state is not OMCS, the slave femtonode changes its transmission power gradually from its current value (usually PHIGH) to PLOW, just before switching off its RF sub-system and its state changes to OMCS. During the transition time (TON-OFF), if necessary the slave femtonode forces its active users to make a handover to the master femtocell.

If D_{P} ≥ TH OFF-ON (slave switching-on condition) and the state is not SCS, the slave femtonode first switches on its RF part with a low power (PLOW) and then gradually increases the power to PHIGH in order to let the active mobile users in the master femtonode to change the serving cell if necessary and its state passes to SCS.

Like in the master case, the transition time is the value of the switch-off time (T_{ON-OFF}) for the transition to the Only Master Coverage State, or the switch-on time (T_{OFF-ON}) for the transition to the Shared Coverage State.

The invention may be used in several scenarios, customizing the hierarchical group algorithm parameters with different purposes.

Three main types of application scenarios are envisaged: Auditorium or Type I scenario, Office Building or Type II scenario and Standard Bases Station or Type III scenario.

### 1. Auditorium or Type I scenario

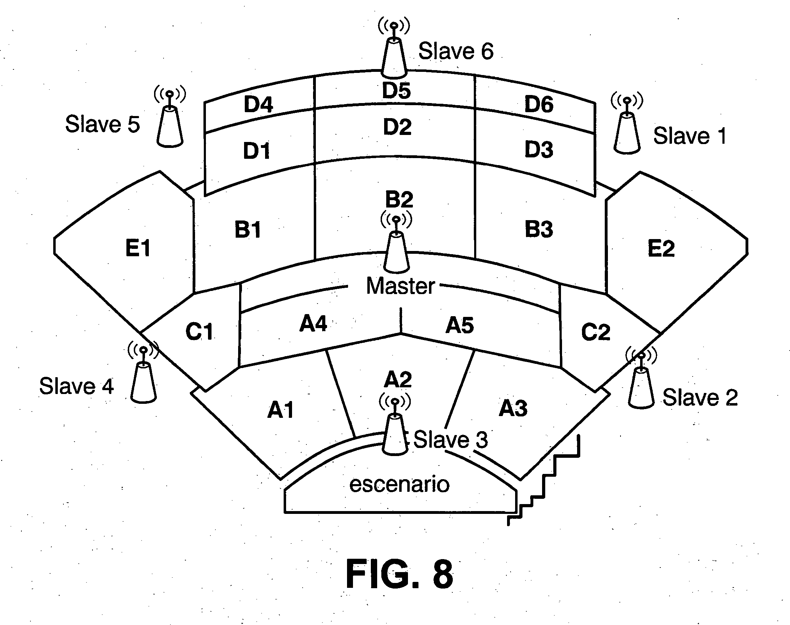

This is the case of environments with very variable traffic and a number of over dimensioned femtonodes for supporting traffic peaks (as shown in Figure 8).

In this scenario, a femtonode in the centre of the auditorium should be enough to cover the whole area when traffic load is very low. This corresponds to the Only Master Coverage State in the proposed invention. In this state the transmission power of the master femtonode must be maximized to cover the whole area.

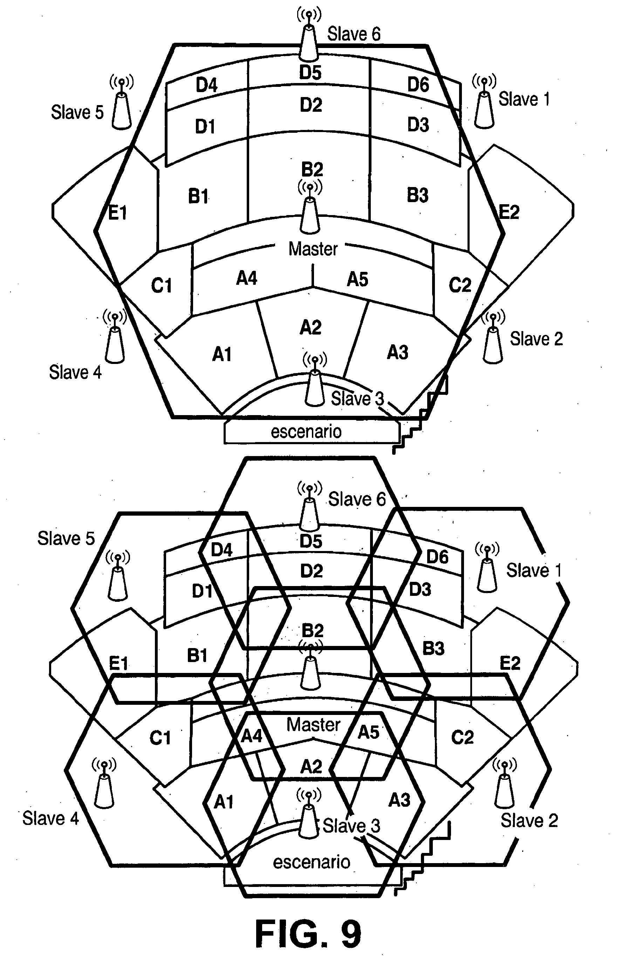

However, when traffic Increases it is necessary that the rest of the femtonodes serve all users, which corresponds to the Shared Coverage State. When slaves are switched-on, master coverage is reduced. Both states can be seen in Figure 9.

A soft transition between the two states is necessary to guarantee that active calls are not affected and handover from the old serving cell to the new one covering the mobile location is performed.

The change of state for this scenario is based on the group load.

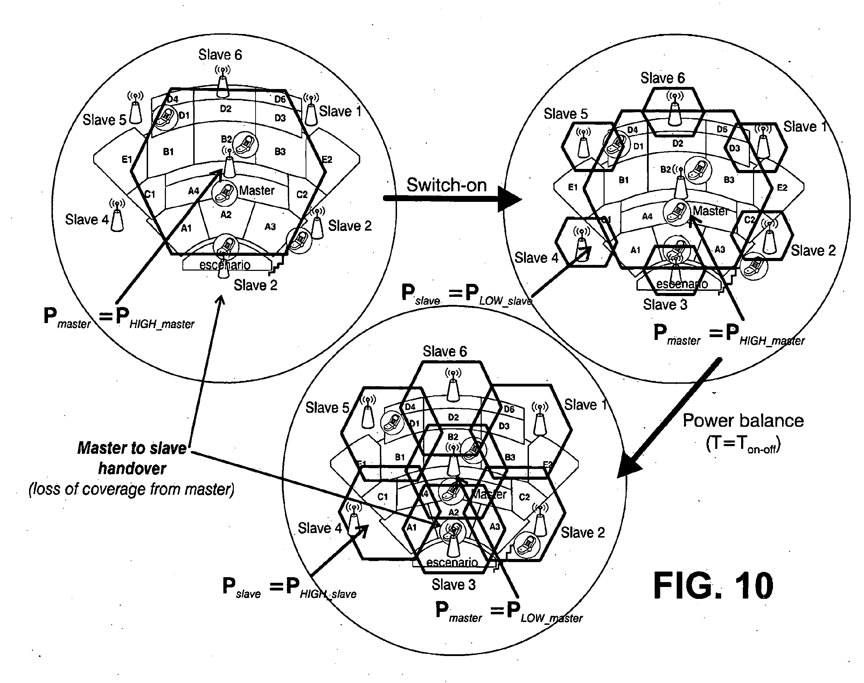

The switch-on procedure for this scenario was shown in Figure 10.

Initially, in a low load state, only the master femtonode is switched-on, as it is enough to cover the whole area. The transmission power for master is set to the high value (PHIGH_MASTER).

When the load switch-on threshold is exceeded (Dₚ ≥ TH OFF-ON), the switch-on procedure is done in two steps:
- A first step is the switch-on of the slave femtonodes with a minimum power (P_{LOW_SLAVE}), maintaining the master transmission power at the same level.
- A second step is the power balance. In a time period TON-OFF, both master and slaves transmission power are gradually changed to the final value (P_{HIGH} for slaves and P_{LOW} for master).

During this transition, users who originally were in the master coverage area and at the end are in the coverage area of a slave can move from master femtocell to slave femtocell either by reselection if they were in idle mode, or by handover, if they were in active mode.

After this moment, any other load balancing procedure can be applied for the group, and the transmission power of the master and slaves can be changed accordingly.

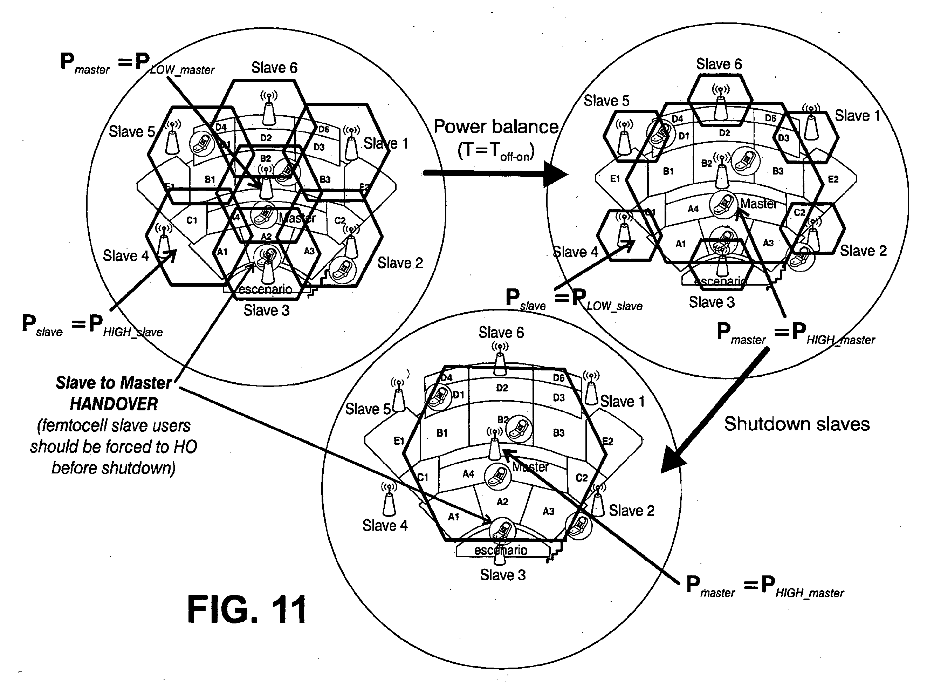

The shutdown procedure for this scenario was shown in Figure11.

When all the femtonodes are radiating and the group load decreases and falls below the switch-off threshold (Dₚ < TH ON-OFF), slave femtonodes are switched-off again.

The switch-off procedure is also done in two steps:
- The first step is the power balance In a time period T_{OFF-ON}, both master and slaves transmission power is gradually changed to the final value (P_{LOW} for slaves and P_{HIGH} for master).
- The second step is the switch-off of the slave femtonodes.

During this transition, users who originally were in a slave coverage area and at the end are in the master coverage area can move from slave femtocell to master femtocell either by reselection if they were in idle mode, or by handover, if they were in active mode. Anyway, before switching-off, the slave femtonodes must force handover to master femtocell of users with active calls.

### 2. Office building or Type II scenario

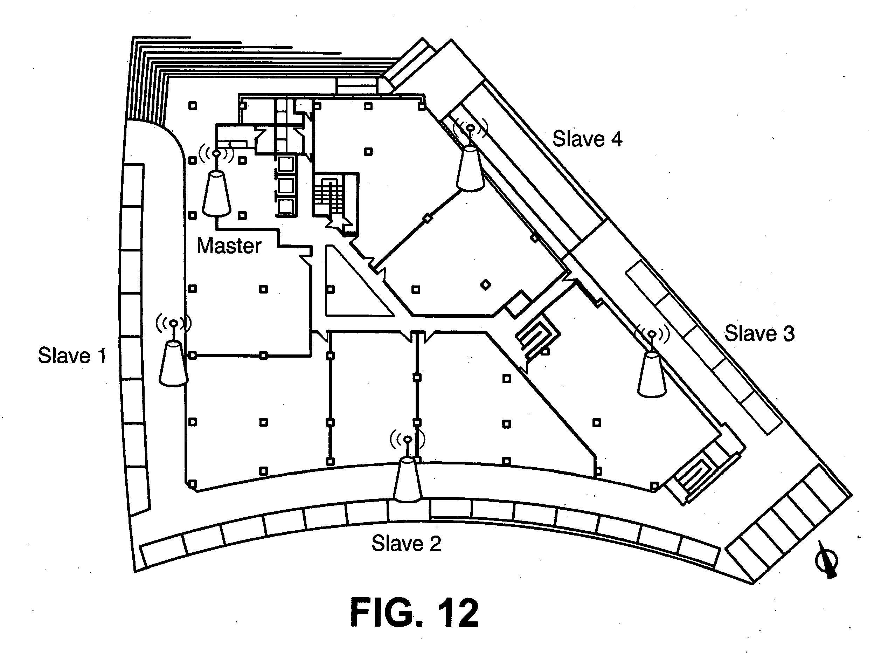

This is the case of environments where there is no traffic for long periods of time as office buildings. During most of night hours and weekends there are no people in the office and femtonodes could be switched-off to save energy (as shown in Figure12).

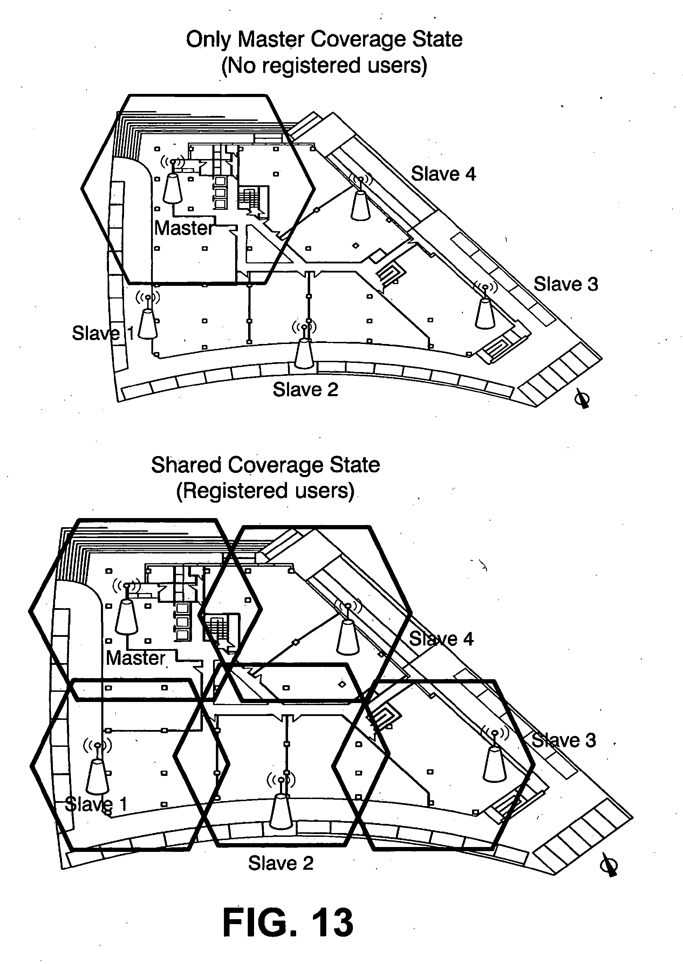

Only Master Coverage State and Shared Coverage State for this scenario is shown in Figure13.

In this case, a master femtonode in the access area could be used to determine if the rest of femtonodes must be switched-on and radiating or not.

The presence of a user in the access area, detected by the registration in the master femtonode, could be used to switch-on the slaves and go to the Shared Coverage State.

In the same way, when there are no users registered in any of the femtonodes (master or slave), slave femtonodes can be switched-off to save energy.

The coverage of the master femtonode may be the same for both states because when there are no users only access area must be covered.

a soft transition between both states is not necessary as no active calls may be affected.

The change of state for this scenario is based on the total number of registered users in the group of femtocells (users in idle mode and users in active mode). The threshold to change the state in this case should be zero.

The switch-on procedure for this scenario is shown in Figue15.

Initially, with no users camped, only the master femtonode is switched-on, as it is enough to cover the access area. Transmission power for the master femtonode is set to the high value (P_{HIGH_MASTER}).

When a user enters the building and camps on the master femtocell, the switch-on threshold is exceeded (Dₚ ≥ TH OFF-ON = 0), the switch-on procedure Is done in only one step.

As no service continuity must be guaranteed because there are no users in the slave femtocells area, no power balance step is needed.

Regarding the algorithm, P_{HIGH} = P_{LOW}, for both master and slave femtonodes, and T_{OFF-ON} is zero.

After this moment, any other load balancing procedure can be applied for the group, and the transmission power of the master and slave femtonodes can be changed accordingly.

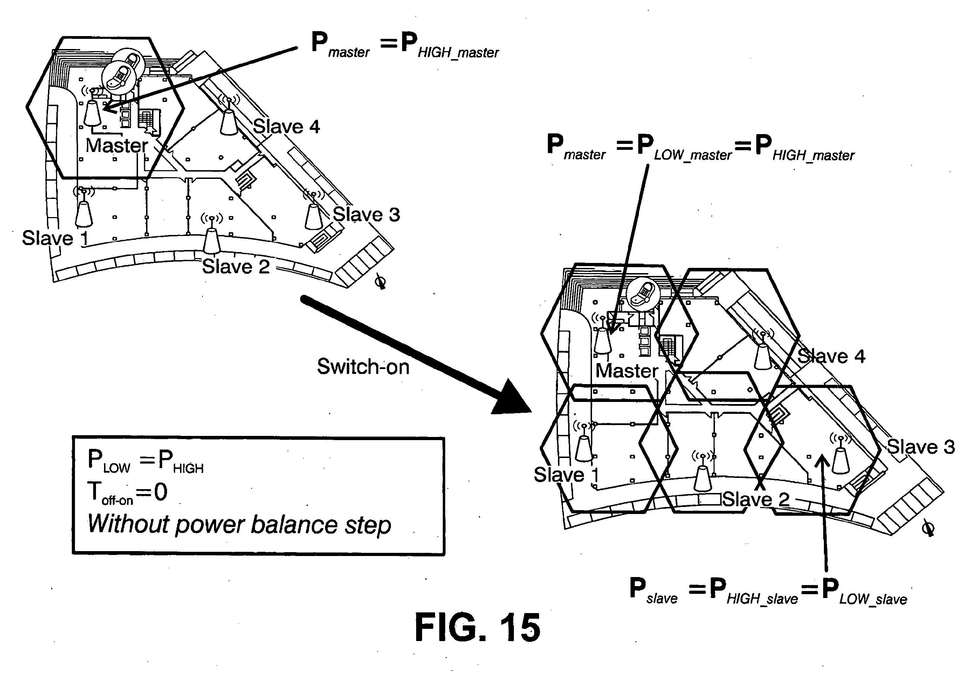

The shutdown procedure for this scenario was shown in Figure15.

When all the femtonodes are radiating but there are no users camped in any of the femtocells, the slave femtonodes are switched-off again.

As no service continuity must be guaranteed because there are no users in the slave femtocells area, no power balance step is needed.

Regarding the algorithm P_{HIGH} = P_{LOW}, for both master and slave femtonodes, and T_{ON-OFF} is zero.

### 3. Standard base station or Type III scenario

The previous embodiments refer to femtonodes Implementations, but this concept can be applied to standard base stations, that include high /medium power macrocells, microcells and picocells. In this case, it is defined a first tier of basic coverage cells complemented with a second tier of cells to boost the capacity, with a high overlap between tiers. In dense urban deployments typically there is a big overlap between cells to obtain a high traffic capability. The first basic coverage cells can increase its transmitted power, to increase is coverage, when the capacity cells are not needed and then are switch off, and vice versa, can decrease its transmitted power when the slave cells are switch on, to increase deployment capacity. The operation of the standard base station scenario presents many similarities with the Auditorium scenario.

In the case of 3GPP LTE the communication between LTE base stations (eNodeB) is implemented through the X2 interface [1] [21] which support functionalities as inter ENodeB handover, interference management and switching on/off eNodeBs for energy saving, but to support this invention the X2 protocol should be extended, to allow the transmission of the required protocol and parameters.

In the case of 3GPP UMTS/HSPA all base stations, that compose a hierarchical group are controlled by the same Radio Network Controller (RNC), that has available all the needed information from the NodeBs, not been necessary communications between NodeBs. The RNC gathers all the needed information, takes the decisions, modifying radio power values or switching on/off the radio sections of the eNodeB that compose the hierarchical group.

A soft transition between the two states (SCS and OMCS) is necessary to guarantee that active calls are not affected and handover from the old serving cell to the new one covering the mobile location is performed.

Like the femtocell case the change of state for this scenario is based on the chosen Decision parameter (Dₚ) that as an example could be group load or number of active / dormant terminals, etc. The initial algorithm values are sent by the LTE O&M subsystem.

Initially, in a low load state, only the master Base Station is switched-on, as it is able to cover the service needs of the whole area. The transmission power for master is set to the high value (P_{HIGH_MASTER}).

When the load switch-on threshold is exceeded (Dₚ ≤ TH OFF-ON), the switch-on procedure is done in two steps:
A first step is the switching-on of the slaves base stations with a minimum power (P_{LOW_SLAVE}), maintaining the master transmission power at the same level.
A second step is the power balance. In a time period T_{ON-OFF}, both master and slaves transmission power are gradually changed to the final value (P_{HIGH} for slaves and P_{LOW} for master).

During this transition, users who originally were in the master coverage area and at the end are in the coverage area of a slave can move from master cell to slave either by reselection if they were in idle mode, or by handover, if they were in active mode.

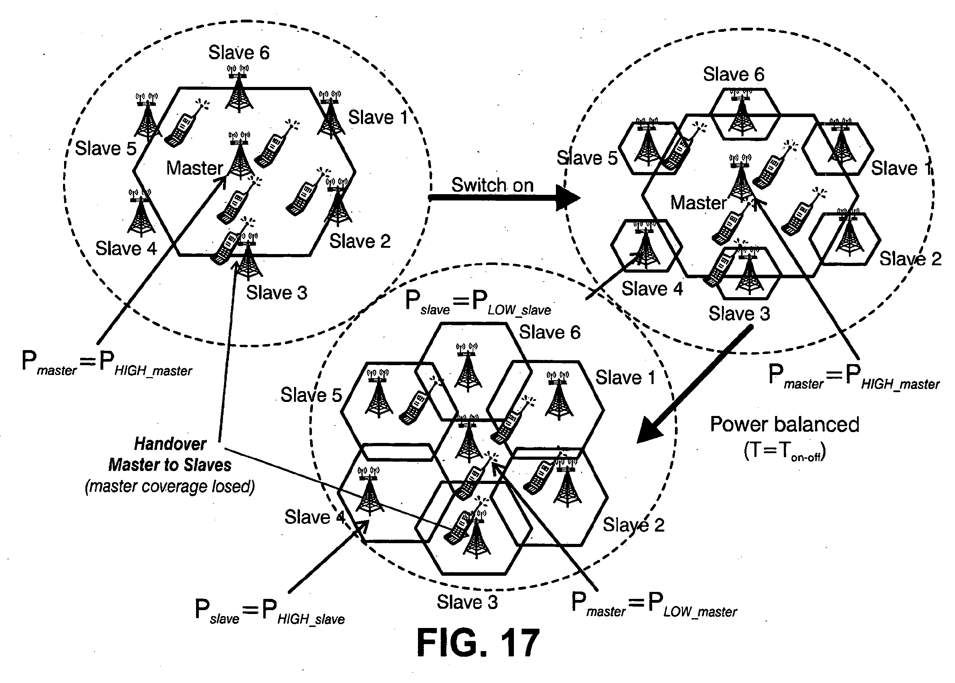

After this moment, any other load balancing procedure can be applied for the group, and the transmission power of the master and slaves can be changed accordingly. The switch-on procedure for this scenario is shown in Figure 17.

When all the cells are radiating and the group load decreases, and falls below the switch-off threshold (Dₚ < TH ON-OFF), slave cells are switched-off again.

The switch-off procedure is done in two steps:
- The first step is power balance. In a time period T_{OFF-ON}, both master and slaves transmission powers are gradually changed to the final value (P_{LOW} for slaves and P_{HIGH} for master).
- The second step is the switching-off of the slave base stations.

During this transition, users who originally were in a slave coverage area and finally are in the master coverage area, can move from a slave cell to the master cell, either by reselection, if they were in idle mode, or by handover, if they were in active mode. Anyway, before switching-off, the slave cell must force handover to master cell of users with active calls. The shutdown procedure for this scenario was shown in Figure11.

### - Advantages of the invention

The main advantage of this invention, as it has been described in this patent application, is switching off any unnecessary radio emissions of femtonodes or standard base stations in a networked group when the load conditions or number of users are low enough to be served only with one femtonode properly located.

In this way, the average level of interference in an office building, for example, can be reduced, as in many occasions many femtonodes will be not radiating, and then the active femtonodes and the layer of macro nodes will suffer a lower interference, giving them the possibility to provide a higher throughput to the customers.

On the other hand, when the number of femtonodes radiating is greater is than that required for the current user load or there are no users nearby, it results in an unnecessary energy consumption, which can be reduced if this invention's switching-off procedure is implemented.

The most remarkable advantages derived from the implementation of this invention can be summarized in the following points:
1. Energy saving, as only the master femtonode or base station is switch-on all the time (from energy saving perspective, it is better a femto at maximal power that several at nominal power).
2. When the slave femtonodes or base stations are turned off, the interference to other macro base station or femtonodes are minimized
3. Adaptation (fitting) to environments with very variable traffic (busy hour, hot spots).
4. No external elements are needed (additional interfaces, terminals or equipment) to switch-on/off slave femtonodes.
5. The mobility between networked femtonodes or base stations is guaranteed in the switching-on/off procedures.

Concerning the energy saving advantage of the invention, it would be very simple to estimate the percentage of energy saving which could be achieved in a group of femtonodes if the slaves have the possibility to switch off their RF sub-system. For example for a particular class of femtonodes with the following energy consumptions:
Femtonode with the RF sub-system off: 165 w.
Femtonode with the RF sub-system on at nominal value: 24 w.
Femtonode with the RF sub-system on at maximum value: 28 w.

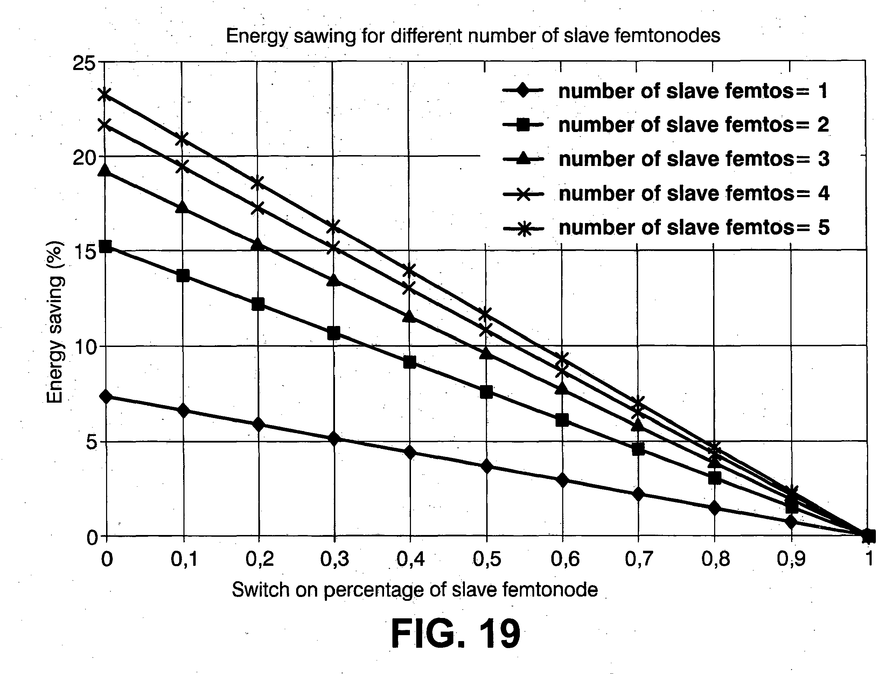

The energy savings achieved for different numbers of slave femtonodes was showed in Figure19. A similar study can be carried out for standard base stations. As shown in Figure19, depending on the percentage of the time that the slave femtonodes RF sections are switched off, the energy saving is higher or lower. In this example the calculation of the energy consumption when the slave femtonodes have switched off the RF part is the sum of the consumption of the slaves with the RF sub-system off and the master with the RF sub-system on at maximum value. Likewise, the reference value of energy consumption when all the femtonodes are active is calculated as the sum of the consumption of all the nodes (master and slaves) with the RF sub-system on at nominal value.

Finally it is important to note that the shutdown mechanism proposed in this invention is specially tailored to scenarios with steeply traffic peaks, in which keeping operative all the femtonodes is only justified when the coverage zone is fully used (e.g. events in an auditorium, business fair infrastructure coverage when there is an event, etc.).

A person skilled in the art could introduce changes and modifications in the embodiments described without departing from the scope of the invention as it is defined in the attached claims.

### ACRONYMS

- 3G: Third Generation cell-phone technology
- 3GPP: Third Generation Partnership Program
- 4G: Fourth Generation cell-phone technology
- ADSL: Asymmetric Digital Subscriber Line
- AGW: Access Gateway
- CN: Core Network
- CPE: Customer Premises Equipment
- CSG: Closed Subscriber Group
- DSL: Digital Subscriber Line
- eNB: LTE Base Station
- FDD: Frequency Division Duplex
- GPS: Global Position System
- HMS: H(e)NB Management System
- HNB: Home Node B
- HeNB: Home evolved Node B
- HGW: Home Gateway
- HSDPA: High Speed Downlink Packet Access
- ICWMC: International Conference on Wireless and Mobile Communications
- IP: Internet Protocol
- LAN: Local Area Network
- LTE: Long Term Evolution
- OAM: Operations, Administration and Maintenance
- RAN: Radio Access Network
- RF: Radio Frequency
- SON: Self Organizing Networks
- UE: User Equipment
- UMTS: Universal Mobile Telecommunication System
- URSI: Union Radio Science International
- WCNC: Wireless Communications and Networking Conference
- X2: Communications interface between eNB's and HeNB's

### REFERENCES

[1] 3GPP TR 23.830: 3rd Generation Partnership Project; Technical Specification Group Services and System Aspects; Architecture aspects of Home NodeB and Home eNodeB (Release 9); September 2009.
[2] 3GPP TS 25.468: 3rd Generation Partnership Project; Technical Specification Group Radio Access Network; UTRAN Iuh Interface RANAP User Adaption (RUA) signalling (Release 9); September 2010.
[3] 3GPP TS 25.469: 3rd Generation Partnership Project; Technical Specification Group Radio Access Network; UTRAN Iuh interface Home Node B (HNB) Application Part (HNBAP) signalling (Release 9); September 2010.
[4] Dynamic Power Control Mechanism for Femtocells Based on the Frame Utilization. Pavel Mach, Zdenek Becvar. Czech Technical University in Prague. ICWMC 2010.
[5] Self-optimization of Coverage for Femtocell Deployments. H. Claussen, L. T.W. Ho, and L. G. Samuel, "Wireless Telecommunication Symposium" (WTS 08), pp. 278-285, Apr. 2008.
[6] Self-Optimization of Femtocell Coverage to Minimize the Increase in Core Network Mobility Signalling, H. Claussen, S. Pivit, and L.T.W. Ho, Bell Labs Technical Journal, vol. 14, no. 2, pp. 155-183, Aug. 2009.
[7] An Overview of the Femtocell Concepts, H. Claussen, H. Lester, and G. S. Louis, Bell Labs Technical Journal, vol. 13, no. 1, pp. 221-246, March 2008.
[8] Automated Wireless Coverage Optimization With Controlled Overlap, D. Fagen, P.A. Vicharelli, J. Weitzen, IEEE Transactions on Vehicular Technology, vol. 57, no. 4, pp. 2395-2403, Jul 2008.
[9] Distributed Power Control Mechanisms for HSDPA Femtocells. Arulselvan, N.; Ramachandran, V.; Kalyanasundaram, S.; Guang Han; Motorola India Private Ltd., Bangalore.
[10] Patent application WO2009099224A1 "Signaling of Resource Status Information between Base Stations for Load Balancing".
[11] Patent application WO2010125853A1 "Wireless Communication System, Wireless Base Station, Wireless Communication Method, and Program".
[12] Optimal Energy Savings in Cellular Access Networks. M. A. Marsan, L. Chiaraviglio, D. Ciullo, M. Meo. Proc. IEEE ICC 2009 Workshop, GreenComm, June 2009.
[13] Energy Savings in Mobile Networks: Case Study on Femtocells. M. Jada, J. Hämäläinen, R. Jäntti. Union of Radio Science International URSI September 2010.
[14] Patent application US 2009/0285143 A1 November 19, 2009, "Apparatus and method for saving power of femto base station in wireless communication system"
[15] Patent application US 2010/0002614 A1 January 7, 2010 "Low power modes for femto cells"
[16] Patent application WO 2010/052112 "Reducing interference and energy consumption for femto base stations"
[17] Patent application WO 2010/027569A1 "Presence-aware cellular communication system and method"
[18] Patent application EP 2056628A1 "Communication network element and method of switching activity states"
[19] Improving Energy Efficiency of Femtocell Base Stations Via User Activity Detection. Ashraf, I. Ho, L.T.W. Glaussen, H. Bell Labs., Alcatel-Lucent, Swindon, UK. Proc. WCNC 2010.
[20] 3GPP TR 32.821: 3rd Generation Partnership Project; Technical Specification Group Services and System Aspects; Telecommunication management; Study of Self-Organizing Networks (SON) related Operations, Administration and Maintenance (OAM) for Home Node B (HNB) (Release 9); June 2009.
[21] 3GPP TR 36.423: 3rd Generation Partnership Project; Technical Specification Group Radio Access Network; Evolved Universal Terrestrial Radio Access Network (E-UTRAN); X2 application protocol (X2AP) (Release 10), v10 0.0, December 2010.
[22] Patent application US 2011/044284 A1 "Energy-Saving Mechanisms in a Heterogeneous Radio Communications Network"
[23] Patent application WO 2010/130104 A1 "Method, Device and System for Controlling Access Point"

## Claims

1. Method for energy saving and minimizing interference level in a radio access node network deployment, comprising the switching on and/or switching off of RF transceivers of one or more radio access nodes of said radio access node network deployment, wherein said radio access node network deployment is arranged in a master/slave configuration wherein each node is suitable to be assigned, by means of an initial configuration, alternatively as a master or as a slave radio access node, wherein the method comprises:
- bidirectionally exchanging information between an assigned master radio access node of said radio access node network deployment and each of the assigned slave radio access nodes, for at least:
o sending each assigned slave radio access node its traffic load information to the assigned master radio access node; and
o processing, the assigned master radio access node the received traffic load information to calculate a decision parameter and further sending said decision parameter to the assigned slave radio access nodes; and
- performing said switching on and/or switching off automatically by the assigned slave radio access nodes, in an autonomous way where each slave radio access node is in charge to change its own transmission conditions, by means of a decision algorithm based on the received decision parameter.

2. Method, as per claim 1, wherein said initial configuration in a master/slave configuration comprises providing said radio access nodes with initial configuration data, said initial configuration data comprising at least one of the following elements: master identification, slaves identification list, hierarchical group ID, algorithm parameters to be processed by said decision algorithm, or a combination thereof.

3. Method as per claim 2, wherein said algorithm parameters are at least one of: said decision parameter, type of decision parameter, switch-on threshold, switch-off threshold, high transmission power, low transmission power, switch-on time, switch-off time and update time.

4. Method as per claim 3, comprising determining said traffic load information by the type indicated by said type of decision parameter.

5. Method as per claim 1, wherein said decision parameter sent to the slave access nodes is the same for all the slave radio access nodes.

6. Method as per claim 1 or 5, comprising sending, the master radio access node, an update request to the slave radio access nodes every update time, for requesting the latter to send its traffic information, and recalculating the decision parameter.

7. Method as per claim 3 or 6, wherein said update time comprises the period of time for updating the value of said decision parameter.

8. Method as per any of claims 1 to 6, comprising each of said slave radio access nodes using said decision algorithm to compare the received decision parameter with said switch-off and switch-on thresholds, and switching off a slave radio access node if the received decision parameter is less than said switch-off threshold and switching on a slave radio access node if the received decision parameter is greater than said switch-on threshold.

9. Method as per any of previous claims, comprising performing said switching on gradually according to said switch-on time parameter and/or performing said switching off gradually according to said switch-off time parameter.

10. Method as per any of the previous claims, further comprising controlling the transmission power of said master radio access node.

11. Method as per claim 10 when depending on claim 3, comprising said master radio access nodes using said decision algorithm to compare the decision parameter with said switch-off and switch-on thresholds, and increasing the transmission power of the master radio access node to the one indicated by said high transmission power parameter if the decision parameter is less than the switch-off threshold and/or decreasing the transmission power of the master radio access node to the one indicated by said low transmission power parameter if the decision parameter is greater than the switch on threshold.

12. Method as per claim 11, comprising performing said increasing of the transmission gradually according to the switch-on time parameter and/or performing said decreasing of the transmission power gradually according to the switch-off time parameter.

13. Method as per any of claims 9 to 12, comprising performing said controlling of the transmission power of said master radio access node and said slave radio access nodes switching on and/or switching off in order to always cover substantially the same coverage area.

14. Method, as per any of the previous claims, wherein said radio access nodes are femtocell nodes.

15. A radio access node network deployment system for energy saving and minimizing interference level, comprising a plurality of radio access nodes with respective RF transceivers switchable on and off, wherein said radio access nodes are arranged according to a master/slave configuration wherein each radio access node is suitable to be assigned, by means of an initial configuration, alternatively as a master or as a slave radio access node , the radio access node network deployment system comprising:
- means for bidirectionally exchanging information between a selected master radio access node of said radio access node network deployment and each of the selected slave radio access nodes, for at least:
o sending each assigned slave radio access node its traffic load information to the assigned master radio access node; and
o processing, the assigned master radio access node, the received traffic load information to calculate a decision parameter and further sending said decision parameter to the assigned slave radio access nodes; and
- control means for performing said switching on and/or switching off automatically by the assigned slave radio access nodes of said radio access node network deployment, in an autonomous way where each assigned slave radio access node is in charge to change its own transmission conditions, by means of a decision algorithm based on the received decision parameter, said control means including:
o first processing means included in said assigned master radio access node implementing said decision algorithm for calculating said decision parameter; and
o second processing means included in each of said assigned slave radio access nodes implementing said decision parameter for performing said switching on and off of its RF transceiver.

16. A radio access node network deployment system as per claim 15, wherein said first processing means are also intended for performing a control of the transmission power of the master radio access node.

17. A radio access node network deployment system as per any of claims 15 to 16, further comprising a management system providing the radio access nodes with the initial configuration data.

## Patentansprüche

1. Verfahren zum Energiesparen und Minimieren des Störpegels in einem Funkzugangsknotennetzaufbau, umfassend das Einschalten und/oder Ausschalten von Funkfrequenzsendeempfängern eines oder mehrerer Funkzugangsknoten des genannten Funkzugangsknotennetzaufbaus, wobei der genannte Funkzugangsknotennetzaufbau in einer Master-/Slave-Konfiguration angeordnet ist, wobei jeder Knoten durch eine Anfangskonfiguration alternativ als ein Master- oder als ein Slave-Funkzugangsknoten zugewiesen werden kann, wobei das Verfahren Folgendes umfasst:
- einen doppeltgerichteten Austausch von Informationen zwischen einem zugewiesenen Master-Funkzugangsknoten des genannten Funkzugangsknotennetzaufbaus und jedem der zugewiesenen Slave-Funkzugangsknoten, zumindest zum:
∘ Senden der Verkehrslastinformationen eines jeden zugewiesenen Slave-Funkzugangsknotens an den zugewiesenen Master-Funkzugangsknoten; und
∘ Verarbeiten durch den zugewiesenen Master-Funkzugangsknoten der empfangenen Verkehrslastinformationen zum Berechnen eines Entscheidungsparameters und weiteres Senden des genannten Entscheidungsparameters an die zugewiesenen Slave-Funkzugangsknoten; und
- ein autonomes Ausführen des genannten Einschaltens und/oder Ausschaltens durch die zugewiesenen Slave-Funkzugangsknoten, wobei jeder Slave-Funkzugangsknoten dafür zuständig ist, seine eigenen Übertragungsbedingungen durch einen Entscheidungsalgorithmus auf Grundlage des empfangenen Entscheidungsparameters zu ändern.

2. Verfahren nach Anspruch 1, wobei die genannte Anfangskonfiguration in einer Master-/Slave-Konfiguration das Versehen der genannten Funkzugangsknoten mit Anfangskonfigurationsdaten umfasst, wobei die genannten Anfangskonfigurationsdaten zumindest eines der folgenden Elemente umfassen: Master-Kennung, Slaves-Kennzeichnungsliste, hierarchische Gruppen-ID, Algorithmusparameter, welche durch den genannten Entscheidungsalgorithmus zu verarbeiten sind, oder eine Kombination davon.

3. Verfahren nach Anspruch 2, wobei die genannten Algorithmusparameter zumindest eines der folgenden Elemente sind: der genannte Entscheidungsparameter, die Art von Entscheidungsparameter, ein Einschaltschwellenwert, ein Ausschaltschwellenwert, eine hohe Übertragungsleistung, eine niedrige Übertragungsleistung, eine Einschaltzeit, eine Ausschaltzeit und eine Update-Zeit.

4. Verfahren nach Anspruch 3, umfassend das Bestimmen der genannten Verkehrslastinformationen durch die durch die genannte Art von Entscheidungsparameter angegebene Art.

5. Verfahren nach Anspruch 1, wobei der genannte Entscheidungsparameter, welcher zu den Slave-Zugangsknoten gesendet wurde, derselbe für sämtliche Slave-Funkzugangsknoten ist.

6. Verfahren nach Anspruch 1 oder 5, umfassend das Senden durch den Master-Funkzugangsknoten einer Update-Anfrage an die Slave-Funkzugangsknoten nach jeder Update-Zeit um Letztere aufzufordern, deren Verkehrsinformationen zu senden, und die Neuberechnung des Entscheidungsparameters.

7. Verfahren nach Anspruch 3 oder 6, wobei die genannte Update-Zeit den Zeitraum zum Updaten des Wertes des genannten Entscheidungsparameters umfasst.

8. Verfahren nach einem der Ansprüche 1 bis 6, umfassend das Verwenden durch jeden der genannten Slave-Funkzugangsknoten des genannten Entscheidungsalgorithmus, um den empfangenen Entscheidungsparameter mit den genannten Ausschalt- und Einschaltschwellenwerten zu vergleichen, und das Ausschalten eines Slave-Funkzugangsknotens, wenn der empfangene Entscheidungsparameter kleiner als der genannte Ausschaltschwellenwert ist, und das Einschalten eines Slave-Funkzugangsknotens, wenn der empfangene Entscheidungsparameter größer als der genannte Einschaltschwellenwert ist.

9. Verfahren nach einem der vorherigen Ansprüche, umfassend das stufenweise Ausführen des genannten Einschaltens gemäß dem genannten Einschaltzeitparameter und/oder das stufenweise Ausführen des genannten Ausschaltens gemäß dem genannten Ausschaltzeitparameter.

10. Verfahren nach einem der vorherigen Ansprüche, weiterhin umfassend das Steuern der Übertragungsleistung des genannten Master-Funkzugangsknotens.

11. Verfahren nach Anspruch 10, wenn dieser von Anspruch 3 abhängt, umfassend das Verwenden durch die genannten Master-Funkzugangsknoten des genannten Entscheidungsalgorithmus, um den Entscheidungsparameter mit den genannten Ausschalt- und Einschaltschwellenwerten zu vergleichen, und ein Erhöhen der Übertragungsleistung des Master-Funkzugangsknotens bis zur durch den genannten Leistungsparameter mit hoher Übertragung angegebenen Übertragungsleistung, wenn der Entscheidungsparameter kleiner als der Ausschaltschwellenwert ist und/oder ein Verringern der Übertragungsleistung des Master-Funkzugangsknotens bis zur durch den genannten Leistungsparameter mit niedriger Übertragung angegebenen Übertragungsleistung, wenn der Entscheidungsparameter größer als der Einschaltschwellenwert ist.

12. Verfahren nach Anspruch 11, umfassend das stufenweise Ausführen des genannten Erhöhens der Übertragung gemäß dem Einschaltzeitparameter und/oder das stufenweise Ausführen des genannten Verringerns der Übertragungsleistung gemäß dem Ausschaltzeitparameter.

13. Verfahren nach einem der Ansprüche 9 bis 12, umfassend das Ausführen des genannten Steuerns der Übertragungsleistung des Master-Funkzugangsknotens und der genannten Slave-Funkzugangsknoten, welche eingeschaltet und/oder ausgeschaltet werden, um stets im Wesentlichen denselben Abdeckungsbereich abzudecken.

14. Verfahren nach einem der vorherigen Ansprüche, wobei die genannten Funkzugangsknoten Femtozellenknoten sind.

15. Funkzugangsknotennetzaufbausystem zum Energiesparen und Minimieren des Störungspegels, umfassend eine Vielzahl an Funkzugangsknoten mit jeweiligen Funkfrequenzsendeempfängern, welche ein-und ausgeschaltet werden können, wobei die genannten Funkzugangsknoten gemäß einer Master-/Slave-Konfiguration angeordnet werden, wobei jeder Funkzugangsknoten geeignet ist, um durch eine Anfangskonfiguration alternativ als ein Master- oder als ein Slave-Funkzugangsknoten zugewiesen zu werden, wobei das Funkzugangsknotennetzaufbausystem Folgendes umfasst:
- Mittel zum doppeltgerichteten Austausch von Informationen zwischen einem ausgewählten Master-Funkzugangsknoten des genannten Funkzugangsknotennetzaufbaus und jedem der ausgewählten Slave-Funkzugangsknoten, zumindest zum:
o Senden der Verkehrslastinformationen eines jeden zugewiesenen Slave-Funkzugangsknotens an den zugewiesenen Master-Funkzugangsknoten; und
o Verarbeiten durch den zugewiesenen Master-Funkzugangsknoten der empfangenen Verkehrslastinformationen zum Berechnen eines Entscheidungsparameters und weiteres Senden des genannten Entscheidungsparameters an die zugewiesenen Slave-Funkzugangsknoten; und
- Steuermittel zum automatischen Ausführen des genannten Einschaltens und/oder Ausschaltens durch die zugewiesenen Slave-Funkzugangsknoten des genannten Funkzugangsknotennetzaufbaus, auf einer autonomen Art und Weise, wobei jeder zugewiesene Slave-Funkzugangsknoten dafür zuständig ist, seine eigenen Übertragungsbedingungen durch einen Entscheidungsalgorithmus auf Grundlage des empfangenen Entscheidungsparameters zu ändern, wobei die genannten Steuermittel Folgendes beinhalten:
∘ erste Verarbeitungsmittel, welche in dem genannten zugewiesenen Master-Funkzugangsknoten enthalten sind, welche den genannten Entscheidungsalgorithmus zum Berechnen des genannten Entscheidungsparameters implementieren; und
∘ zweite Verarbeitungsmittel, welche in jedem der genannten zugewiesenen Slave-Funkzugangsknoten enthalten sind, welche den genannten Entscheidungsparameter zum Ausführen des genannten Einschaltens und Ausschaltens seines Funkfrequenzsendeempfängers implementieren.

16. Funkzugangsknotennetzaufbausystem nach Anspruch 15, wobei die genannten ersten Verarbeitungsmittel ebenfalls zum Ausführen eines Steuerns der Übertragungsleistung des Master-Funkzugangsknotens vorgesehen sind.

17. Funkzugangsknotennetzaufbausystem nach einem der Ansprüche 15 bis 16, weiterhin umfassend ein Managementsystem, welches die Funkzugangsknoten mit den Anfangskonfigurationsdaten versieht.

## Revendications

1. Procédé pour économiser de l'énergie et minimiser le niveau d'interférence dans un déploiement de réseau de noeud d'accès radio, comprenant l'activation et/ou désactivation d'émetteurs-récepteurs RF d'un ou plusieurs noeuds d'accès radio dudit déploiement de réseau de noeud d'accès radio, dans lequel ledit déploiement de réseau de noeud d'accès radio est disposé dans une configuration maître/esclave dans laquelle chaque noeud est apte à être assigné, au moyen d'une configuration initiale, alternativement comme un noeud d'accès radio maître ou esclave, dans lequel le procédé comprend :
- un échange bidirectionnel d'information entre un noeud d'accès radio maître assigné dudit déploiement de réseau de noeud d'accès radio et chacun des noeuds d'accès radio esclaves assignés, pour au moins :
o envoyer chaque noeud d'accès radio esclave assigné son information de densité de trafic au noeud d'accès radio maître assigné ; et
o traiter, le noeud d'accès radio maître assigné l'information de densité de trafic reçue pour calculer un paramètre de décision et envoyer en outre ledit paramètre de décision aux noeuds d'accès radio esclaves assignés ; et
- une réalisation automatique de ladite activation et/ou désactivation par les noeuds d'accès radio esclaves assignés, de manière autonome où chaque noeud d'accès radio esclave est en charge de changer ses propres conditions de transmission, au moyen d'un algorithme de décision basé sur le paramètre de décision reçu.

2. Procédé, selon la revendication 1, dans lequel ladite configuration initiale dans une configuration maître/esclave comprend l'approvisionnement desdits noeuds d'accès radio en données de configuration initiale, lesdites données de configuration initiale comprenant au moins l'un des éléments suivants : identification de maître, liste d'identification d'esclaves, ID de groupe hiérarchique, paramètres d'algorithme devant être traités par ledit algorithme de décision, ou une combinaison de ceux-ci.

3. Procédé selon la revendication 2, dans lequel lesdits paramètres d'algorithme sont au moins l'un parmi : ledit paramètre de décision, type de paramètre de décision, seuil d'activation, seuil de désactivation, puissance de transmission élevée, puissance de transmission faible, temps d'activation, temps de désactivation et temps d'actualisation.

4. Procédé selon la revendication 3, comprenant la détermination de ladite information de densité de trafic par le type indiqué par ledit type de paramètre de décision.

5. Procédé selon la revendication 1, dans lequel ledit paramètre de décision envoyé aux noeuds d'accès esclaves est le même pour tous les noeuds d'accès radio esclaves.

6. Procédé selon la revendication 1 ou 5, comprenant l'envoi, le noeud d'accès radio maître, d'une demande d'actualisation aux noeuds d'accès radio esclaves à chaque temps d'actualisation, pour demander à ces derniers d'envoyer leur information de trafic, et recalculer le paramètre de décision.

7. Procédé selon la revendication 3 ou 6, dans lequel ledit temps d'actualisation comprend la période de temps pour actualiser la valeur dudit paramètre de décision.

8. Procédé selon l'une quelconque des revendications 1 à 6, comprenant l'utilisation de chacun desdits noeuds d'accès radio esclaves, dudit algorithme de décision pour comparer le paramètre de décision reçu avec lesdits seuils d'activation et désactivation, et la désactivation d'un noeud d'accès radio esclave si le paramètre de décision reçu est inférieur audit seuil de désactivation et l'activation d'un noeud d'accès radio esclave si le paramètre de décision reçu est supérieur audit seuil d'activation.

9. Procédé selon l'une quelconque des revendications précédentes, comprenant la réalisation graduelle de ladite activation selon ledit paramètre de temps d'activation et/ou la réalisation graduelle de ladite désactivation selon ledit paramètre de temps de désactivation.

10. Procédé selon l'une quelconque des revendications précédentes, comprenant en outre le contrôle de la puissance de transmission dudit noeud d'accès radio maître.

11. Procédé selon la revendication 10 lorsqu'elle dépend de la revendication 3, comprenant l'utilisation par lesdits noeuds d'accès radio maîtres, dudit algorithme de décision pour comparer le paramètre de décision avec lesdits seuils d'activation et désactivation, et l'augmentation de la puissance de transmission du noeud d'accès radio maître à celle indiquée par ledit paramètre de puissance de transmission élevée si le paramètre de décision est inférieur au seuil de désactivation et/ou la diminution de la puissance de transmission du noeud d'accès radio maître à celle indiquée par ledit paramètre de puissance de transmission faible si le paramètre de décision est supérieur au seuil d'activation.

12. Procédé selon la revendication 11, comprenant la réalisation graduelle de ladite augmentation de la transmission selon le paramètre de temps d'activation et/ou la réalisation graduelle de ladite diminution de la puissance de transmission selon le paramètre de temps de désactivation.

13. Procédé selon l'une quelconque des revendications 9 à 12, comprenant la réalisation par ledit contrôle de la puissance de transmission dudit noeud d'accès radio maître et desdits noeuds d'accès radio esclaves, de l'activation et/ou désactivation afin de couvrir toujours substantiellement la même zone de couverture.

14. Procédé, selon l'une quelconque des revendications précédentes, dans lequel lesdits noeuds d'accès radio sont des noeuds de femtocellule.

15. Système de déploiement de réseau de noeud d'accès radio pour économiser de l'énergie et minimiser le niveau d'interférence, comprenant une pluralité de noeuds d'accès radio avec des émetteurs-récepteurs RF respectifs activables et désactivables, dans lequel lesdits noeuds d'accès radio sont disposés selon une configuration maître/esclave dans laquelle chaque noeud d'accès radio est apte à être assigné, au moyen d'une configuration initiale, alternativement comme un noeud d'accès radio maître ou esclave, le système de déploiement de réseau de noeud d'accès radio comprenant :
- des moyens pour échanger bidirectionnellement de l'information entre un noeud d'accès radio maître sélectionné dudit déploiement de réseau de noeud d'accès radio et chacun des noeuds d'accès radio esclaves sélectionnés, pour au moins :
o envoyer, chaque noeud d'accès radio esclave assigné, son information de densité de trafic au noeud d'accès radio maître assigné ; et
o traiter, le noeud d'accès radio maître assigné, l'information de densité de trafic reçue pour calculer un paramètre de décision et envoyer en outre ledit paramètre de décision aux noeuds d'accès radio esclaves assignés ; et
- des moyens de contrôle pour réaliser automatiquement ladite activation et/ou désactivation par les noeuds d'accès radio esclaves assignés dudit déploiement de réseau de noeud d'accès radio, de manière autonome où chaque noeud d'accès radio esclave assigné est en charge de changer ses propres conditions de transmission, au moyen d'un algorithme de décision basé sur le paramètre de décision reçu, lesdits moyens de contrôle incluant :
o de premiers moyens de traitement inclus dans ledit noeud d'accès radio maître assigné mettant en oeuvre ledit algorithme de décision pour calculer ledit paramètre de décision ; et
o de deuxièmes moyens de traitement inclus dans chacun desdits noeuds d'accès radio esclaves assignés mettant en oeuvre ledit paramètre de décision pour réaliser ladite activation et désactivation de leur émetteur-récepteur RF.

16. Système de déploiement de réseau de noeud d'accès radio selon la revendication 15, dans lequel lesdits premiers moyens de traitement sont également prévus pour réaliser un contrôle de la puissance de transmission du noeud d'accès radio maître.

17. Système de déploiement de réseau de noeud d'accès radio selon l'une quelconque des revendications 15 à 16, comprenant en outre un système de gestion approvisionnant les noeuds d'accès radio en les données de configuration initiale.
